# EUROPEAN PATENT APPLICATION

(11) **EP 4 456 174 A2**
(43) Date of publication of application: **30.10.2024**
(21) Application number: 24165740.2
(22) Date of filing: 25.03.2024
(51) Int. Cl.: H01M 4/133, H01M 4/134, H01M 4/36, H01M 4/38, H01M 4/40, H01M 4/62, H01M 4/66, H01M 10/0525, H01M 10/0562, H01M 4/02

(54) **ALL-SOLID SECONDARY BATTERY**

(30) Priority: 26.03.2023 KR 20230039378; 05.06.2023 KR 20230072376
(71) Applicant: Samsung SDI Co., Ltd., Yongin-si, Gyeonggi-do 17084 (KR)
(72) Inventor: Son, Inhyuk, 17084 Gyeonggi-do (KR); Lee, Jieun, 17084 Gyeonggi-do (KR); Park, Taehyun, 17084 Gyeonggi-do (KR); Jo, Sungnim, 17084 Gyeonggi-do (KR); Shim, Kyueun, 17084 Gyeonggi-do (KR)
(74) Representative: Michalski Hüttermann & Partner Patentanwälte mbB

(57) **Abstract**

An all-solid secondary battery including a positive electrode layer, a negative electrode layer, and a solid electrolyte layer between the positive electrode layer and the negative electrode layer, wherein the positive electrode layer includes a positive current collector and a positive active material layer, the solid electrolyte layer includes a sulfide-based solid electrolyte, and the negative electrode layer includes a negative current collector, a first negative active material layer, and a first protective layer between the negative current collector and the first negative active material layer, wherein the first negative active material layer includes a carbonaceous material matrix and a metallic negative active material located in the carbonaceous material matrix, and the carbonaceous material matrix includes a first carbonaceous nanostructure, and the first protective layer includes a second carbonaceous nanostructure.

## Description

### CROSS-REFERENCE TO RELATED APPLICATION

The present application claims priority to and the benefit of Korean Patent Application Nos. 10-2023-0039378, filed on March 26, 2023, and 10-2023-0072376, filed on June 5, 2023, in the Korean Intellectual Property Office, the entire content of each of the two applications is incorporated herein by reference.

### BACKGROUND

### 1. Field

Embodiments of the present disclosed described herein are related to an all-solid secondary battery.

### 2. Description of the Related Art

Extensive research has recently been conducted on batteries providing high energy density and safety. Lithium batteries are utilized in information devices, communication devices, vehicles, and/or the like. Safety is important in vehicles, because vehicles are related to people's wellbeing.

A liquid electrolyte-containing lithium battery includes a flammable organic solvent. Liquid electrolyte-containing lithium batteries have high risks of overheating and fire if (e.g., when) a short circuit occurs.

However, the risks of overheating and fire of a solid electrolyte are lower than that of a liquid electrolyte. Therefore, solid electrolyte-containing lithium batteries may provide improved safety compared to liquid electrolyte-containing lithium batteries.

### SUMMARY

Sulfide-based solid electrolytes easily react with a negative current collector to cause side reactions. For example, side reactions occurring between a sulfide-based solid electrolyte and a copper current collect if (e.g., when) the sulfide-based solid electrolyte is brought into contact with the copper current collector during a charging and discharging process may deteriorate lifespan of lithium batteries. Therefore, it is desired or suitable to develop methods of blocking contact between a sulfide-based solid electrolyte and a negative current collector.

If (e.g., when) a negative active material layer is disposed between a solid electrolyte layer and a negative current collector by a wet method, it is difficult to form a substantially uniform thickness of the negative active material layer. A thickness difference of the negative active material layer may cause substantially non-uniform plating of lithium and growth of lithium dendrite between the negative active material layer and the negative current collector. A short circuit may occur in a lithium battery due to such substantially non-uniform plating of lithium and/or growth of lithium dendrite. It is thus desired or suitable to develop methods of reducing the thickness difference of the negative active material layer.

If (e.g., when) a negative active material layer is disposed between a solid electrolyte layer and a negative current collector by a wet method, a negative active material may easily aggregate in the negative active material layer during a drying process. Substantially non-uniform current density may be formed in the negative active material layer due to the aggregated negative active material. The substantially non-uniform current density may cause substantially non-uniform plating of lithium and/or growth of lithium dendrite between the negative active material layer and the negative current collector. A short circuit may occur in a lithium battery due to the substantially non-uniform plating of lithium and/or growth of lithium dendrite. It is thus desired or suitable to develop methods of inhibiting aggregation of the negative active material in the negative active material layer.

Aspects according to one or more embodiments are directed to an all-solid secondary battery having a new structure is provided.

Additional aspects will be set forth in part in the description which follows and, in part, will be apparent from the description, or may be learned by practice of the presented embodiments of the present disclosure.

According to one or more embodiments, an all-solid secondary battery includes:
a positive electrode layer, a negative electrode layer, and a solid electrolyte layer disposed between the positive electrode layer and the negative electrode layer,
wherein the positive electrode layer includes a positive current collector and a positive active material layer, the solid electrolyte layer includes a sulfide-based solid electrolyte, and
the negative electrode layer includes a negative current collector, a first negative active material layer, and a first protective layer disposed between the negative current collector and the first negative active material layer,
wherein the first negative active material layer includes a carbonaceous material matrix and a metallic negative active material located in the carbonaceous material matrix, and
the carbonaceous material matrix includes a first carbonaceous nanostructure, and the first protective layer includes a second carbonaceous nanostructure.

### BRIEF DESCRIPTION OF DRAWINGS

The above and other aspects, features, and advantages of certain embodiments of the present disclosure will be more apparent from the following description taken in conjunction with the accompanying drawings, in which:
FIG. 1 is a cross-sectional view of an all-solid secondary battery according to embodiments;
FIG. 2 is a cross-sectional view of a bi-cell all-solid secondary battery according to embodiments;
FIG. 3 is a cross-sectional view of an all-solid secondary battery according to embodiments;
FIG. 4 is a cross-sectional view of an all-solid secondary battery according to embodiments; and
FIG. 5 is a cross-sectional view of a bi-cell all-solid secondary battery according to embodiments.

### DETAILED DESCRIPTION

Reference will now be made in more detail to embodiments, examples of which are illustrated in the accompanying drawings, wherein like reference numerals refer to like elements throughout, and duplicative descriptions thereof may not be provided. In this regard, the present embodiments may have different forms and should not be construed as being limited to the descriptions set forth herein. For example, the embodiments are merely described herein, by referring to the drawings, to explain aspects of the present description. As utilized herein, the term "and/or" includes any and all combinations of one or more of the associated listed items. As used herein, expressions such as "at least one of", "one of", and "selected from", when preceding a list of elements, modify the entire list of elements and do not modify the individual elements of the list. For example, "at least one of a, b or c", "at least one selected from a, b and c", etc., may indicate only a, only b, only c, both (e.g., simultaneously) a and b, both (e.g., simultaneously) a and c, both (e.g., simultaneously) b and c, all of a, b, and c, or variations thereof.

Various embodiments are illustrated in the accompanying drawings. The present disclosure may, however, be embodied in many different forms and should not be construed as limited to the embodiments set forth herein. Rather, the embodiments are provided so that this disclosure will be thorough and complete, and will fully convey the scope of the present disclosure to those skilled in the art. Like reference numerals in the drawings denote like elements.

It will be understood that if (e.g., when) one element is referred to as being "on" another element, it may be directly on the other element, or intervening elements may also be present therebetween. if (e.g., when) one element is referred to as being "directly on" another element, there is no intervening element therebetween.

Although the terms "first", "second", "third", and/or the like may be utilized herein to describe one or more suitable elements, components, regions, layers, and/or sections, these elements, components, regions, layers and/or sections should not be limited by these terms. These terms are only utilized to distinguish one element, component, region, layer or section from another region, layer or section. Thus, a first element, component, region, layer, or section discussed herein could be termed a second element, component, region, layer or section without departing from the teachings herein.

The terms utilized herein is for the purpose of describing particular embodiments only and is not intended to be limiting of the present disclosure. As utilized herein, an expression utilized in the singular may encompass the expression "at least one", unless otherwise indicated. The "at least one" should not be construed as singular. As utilized herein, the term "and/or" includes any and all combinations of one or more of the associated listed items. The terms such as "including" and/or "having" are intended to indicate the existence of features, regions, integers, processes, components, and/or elements disclosed in the specification, and are not intended to preclude the possibility that one or more other features, regions, integers, processes, components, and/or elements thereof may exist or may be added. As used herein, the singular forms "a," "an," and "the" are intended to include the plural forms as well, unless the context clearly indicates otherwise. Further, the utilization of "may" when describing embodiments of the present disclosure refers to "one or more embodiments of the present disclosure".

Spatially relative terms, such as "under", "below", "lower", "on", "above", or "upper", may be utilized herein for ease of description of the relationship of one element or feature to another element(s) or feature(s) as illustrated in the drawings. It will be understood that the spatially relative terms are intended to encompass different orientations of a device in utilize or operation, in addition to the orientation depicted in the drawings. For example, when the device in the drawings is turned over, elements described as "below" other elements or features would then be oriented "above" the other elements or features. Thus, the example term "below" may encompass both (e.g., simultaneously) an orientation of above and below. The device may be otherwise oriented (rotated 90 degrees or at other orientations) and the spatially relative descriptors utilized herein interpreted accordingly.

Unless otherwise defined, all terms (including technical and scientific terms) utilized herein have the same meaning as commonly understood by one or ordinary skill in the art to which this application belongs. Also, it will be further understood that terms, such as those defined in commonly utilized dictionaries, should be interpreted as having a meaning that is consistent with their meaning in the context of the relevant art and will not be interpreted in an idealized or overly formal sense unless expressly so defined herein.

Example embodiments will be described herein with reference to schematic cross-sectional view of ideal embodiments. As such, variations from the shapes of the illustrations as a result, for example, of manufacturing techniques and/or tolerances, are to be expected. Thus, example embodiments should not be construed as limited to the particular shapes of regions illustrated herein but are to include deviations in shapes that result, for example, from manufacturing. For example, a region illustrated or described as flat may, typically, have rough and/or nonlinear features. Moreover, sharp angles illustrated in the drawings may be rounded. Thus, the regions illustrated in the drawings are schematic in nature and their shapes are not intended to illustrate the actual shape of a region of a device and are not intended to limit the scope of claims.

The term "Group" refers to a group of elements in the periodic table numbered from 1 to 18 classified according to a classification system of The International Union of Pure and Applied Chemistry ("IUPAC").

In the present disclosure, a "particle diameter" of particles may indicate an average diameter of spherical particles or an average length of major axes of non-spherical particles. Particle diameters may be measured utilizing a particle size analyzer (PSA). The "particle diameter" may be, for example, an average particle diameter. The "average particle diameter" may be, for example, a median particle diameter (D50).

D50 may refer to a particle diameter corresponding to 50 % of the particles in a cumulative distribution curve measured by a laser diffraction method in which particles are accumulated in the order of particle diameter from the smallest particle to the largest particle.

D90 may refer to a particle diameter corresponding to 90 % of the particles in a cumulative distribution curve measured by a laser diffraction method in which particles are accumulated in the order of particle diameter from the smallest particle to the largest particle.

D10 may refer to a particle diameter corresponding to 10 % of the particles in a cumulative distribution curve measured by a laser diffraction method in which particles are accumulated in the order of particle diameter from the smallest particle to the largest particle.

In some embodiments, the "particle diameter" may be determined, for example, based on manuals or utilizing software from cross-sectional images of a scanning electron microscope and/or a transmission electron microscope, and may be an arithmetic average of particle diameters of a plurality of particles.

In the present disclosure, the term "metal" may include metals and metalloids such as silicon and germanium in an elemental or ionic state.

In the present disclosure, the term "alloy" may refer to a mixture of two or more metals.

In the present disclosure, the term "electrode active material" may refer to a material for electrodes allowing lithiation and delithiation.

In the present disclosure, the term "positive active material" may refer to a material for positive electrodes allowing lithiation and delithiation.

In the present disclosure, the term "negative active material" may refer to a material for negative electrodes allowing lithiation and delithiation.

In the present disclosure, the terms "lithiation" and "lithiating" may refer to a process of adding lithium to an electrode active material.

In the present disclosure, the terms "delithiation" and "delithiating" may refer to a process of removing lithium from an electrode active material.

In the present disclosure, the terms "charging" and "charge" may refer to a process of supplying electrochemical energy to a battery.

In the present disclosure, the terms "discharging" and "discharge" may refer to a process of removing electrochemical energy from a battery.

In the present disclosure, the terms "positive electrode" and "cathode" may refer to an electrode in which electrochemical reduction and lithiation occur during discharging.

In the present disclosure, the terms "negative electrode" and "anode" may refer to an electrode in which electrochemical oxidation and delithiation occur during discharging.

As utilized herein, the term "substantially" and similar terms are utilized as terms of approximation and not as terms of degree, and are intended to account for the inherent deviations in measured or calculated values that would be recognized by those of ordinary skill in the art. Also, the term "about" and similar terms, when utilized herein in connection with a numerical value or a numerical range, are inclusive of the stated value and a value within an acceptable range of deviation for the particular value as determined by one of ordinary skill in the art, considering the measurement in question and the error associated with measurement of the particular quantity (e.g., the limitations of the measurement system). For example, "about" may refer to within one or more standard deviations, or within ± 30%, 20%, 10%, 5% of the stated value.

Also, any numerical range recited herein is intended to include all subranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

The terms "fibril" or "fibrils" as utilized herein refer to the fibrous shape of a substance that has a larger aspect ratio than a particulate of said substance. As utilized herein, the terms "fibrillized" and "fibrillize" refer to a process of converting (e.g., by grinding or pulverizing) particulates of a substance into fibrous shape (i.e., fibrils) of said substance that has higher aspect ratio than the particulates.

While some embodiments have been described, alternatives, modifications, variations, improvements, and substantial equivalents that are or may be presently unforeseen may arise to applicants or others skilled in the art. The appended claims as filed and as they may be amended are intended to embrace all such alternatives, modification, variations, improvements, and substantial equivalents.

Hereinafter, an all-solid secondary battery according to embodiments will be described in more detail.

### All-solid Secondary Battery

An all-solid secondary battery according to embodiments may include: a positive electrode layer; a negative electrode layer; and a solid electrolyte layer disposed between the positive electrode layer and the negative electrode layer, wherein the positive electrode layer includes a positive current collector and a positive active material layer, the solid electrolyte layer includes a sulfide-based solid electrolyte, and the negative electrode layer includes a negative current collector, a first negative active material layer, and a first protective layer disposed between the negative current collector and the first negative active material layer, wherein the first negative active material layer includes a carbonaceous material matrix and a metallic negative active material located in the carbonaceous material matrix, and the carbonaceous material matrix includes a first carbonaceous nanostructure, and the first protective layer includes a second carbonaceous nanostructure.

If (e.g., when) the first negative active material layer includes the carbonaceous nanostructure arranged by a dry method, defects such as thickness non-uniformity of a negative active material layer and aggregation of a negative active material occurring in a wet negative active material layer may be prevented or reduced. Substantially non-uniform plating of lithium and/or growth of lithium dendrite may be inhibited during a charging and discharging process because the all-solid secondary battery includes the first negative active material layer. As a result, a short circuit of the all-solid secondary battery may be prevented or reduced and lifespan characteristics thereof may be improved. Side reactions caused by a contact between the sulfide-based solid electrolyte and the negative current collector may be inhibited because the all-solid secondary battery includes the first protective layer. As a result, reversibility of electrode reaction may be improved and lifespan characteristics of the all-solid secondary battery may be improved.

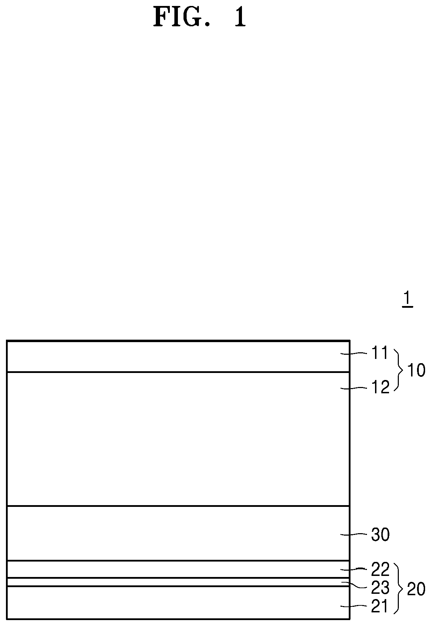

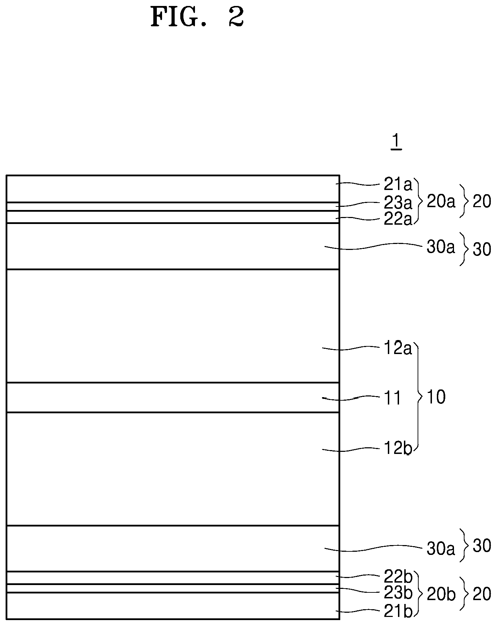

Referring to FIGS. 1 to 5, an all-solid secondary battery 1 may include a positive electrode layer 10; a negative electrode layer 20; and a solid electrolyte layer 30 disposed between the positive electrode layer 10 and the negative electrode layer 20, wherein the positive electrode layer 10 includes a positive current collector 11 and a positive active material layer 12, the solid electrolyte layer 30 includes a sulfide-based solid electrolyte, and the negative electrode layer 20 includes a negative current collector 21, a first negative active material layer 22, and a first protective layer disposed between the negative current collector 21 and the first negative active material layer 22, wherein the first negative active material layer 22 includes a carbonaceous material matrix and a metallic negative active material arranged in the carbonaceous material matrix, the carbonaceous material matrix includes a first carbonaceous nanostructure, and the first protective layer 23 includes a second carbonaceous nanostructure.

### Negative Electrode Layer

### Negative Electrode Layer: Carbonaceous Material Matrix

Referring to FIGS. 1 to 5, the negative electrode layer 20 (20a and 20b) may include: a negative current collector 21 (21a and 21b); a negative active material layer 22 (22a and 22b); and a first protective layer 23 (23a and 23b) disposed between the negative current collector 21 and the first negative active material layer 22. The first negative active material layer 22 may include a carbonaceous material matrix and a metallic negative active material located in the carbonaceous material matrix.

The first negative active material layer 22 may include a carbonaceous material matrix. The carbonaceous material matrix may include a first carbonaceous nanostructure. The carbonaceous nanostructure may have a nano-scale dimension and may be a structure formed of a carbonaceous material. The carbon nanostructure may include, for example, a one-dimensional carbon nanostructure, a two-dimensional carbon nanostructure, a three-dimensional carbon nanostructure, or any combination thereof. The one-dimensional carbonaceous nanostructure may include, for example, carbon nanorod, carbon nanofiber, carbon nanotube, or any combination thereof. The two-dimensional carbonaceous nanostructure may include, for example, carbon nanosheet, carbon nanobelt, carbon nanoflake, graphene, graphene oxide (GO), reduced graphene oxide (rGO), or any combination thereof. The three-dimensional carbonaceous nanostructure may be a structure in which a plurality of one-dimensional carbonaceous nanostructures and/or two-dimensional carbonaceous nanostructures are connected or stacked. The first carbonaceous nanostructure may include, for example, a two-dimensional nanostructure. The first carbonaceous nanostructure may include, for example, graphene, graphene oxide (GO), reduced graphene oxide (rGO), or any combination thereof.

The carbonaceous material matrix may include, for example, the first carbonaceous nanostructure arranged in a direction. The first carbonaceous nanostructure may include, for example, graphene. The carbonaceous material matrix may include graphene arranged in a direction. The carbonaceous material matrix may include, for example, the first carbonaceous nanostructure arranged in a direction parallel to a surface of the negative current collector 21. The carbonaceous material matrix may include, for example, graphene. The carbonaceous material matrix may include, for example, graphene arranged in a direction parallel to the surface of the negative current collector 21. The graphene may be arranged, for example, at an angle of about -30° to about 30°, about -20° to about 20°, about -10° to about 10°, or about - 5° to about 5° with the surface of the negative current collector 21. The growth of lithium dendrite from the first negative active material layer 22 may more effectively be inhibited because the first carbonaceous nanostructure is arranged in a direction parallel to the surface of the negative current collector 21 in the carbonaceous material matrix. For example, the carbonaceous material matrix may have a structure in which the first carbonaceous nanostructure is stacked in a thickness direction of the first negative active material layer 22. In the carbonaceous material matrix, a plurality of first carbonaceous nanostructures may be stacked along the thickness direction of the first negative active material layer 22. The carbonaceous material matrix may include, for example, a plurality of first carbonaceous nanostructure layers stacked in the thickness direction of the first negative active material layer 22. In the carbonaceous material matrix, structural density and structural stability of the first negative active material layer 22 may be improved because the first carbonaceous nanostructures are stacked in the thickness direction of the first negative active material layer 22.

The carbonaceous material matrix may include, for example, the first carbonaceous nanostructures irregularly located without being arranged. The first carbonaceous nanostructure may include, for example, graphene, and the carbonaceous material matrix may include graphenes irregularly located without being arranged. The carbonaceous material matrix may include, for example, the first carbonaceous nanostructures irregularly and/or randomly located with respect to the surface of the negative current collector 21. The carbonaceous material matrix may include, for example, graphenes, and the carbonaceous material matrix may include graphenes irregularly and/or randomly located with respect to the surface of the negative current collector 21. Ion conduction paths and/or electron conduction paths through the first negative active material layer 22 may be diversified because the first carbonaceous nanostructures are irregularly and/or randomly located with respect to the surface of the negative current collector 21 in the carbonaceous material matrix. For example, internal resistance of the all-solid secondary battery including the carbonaceous material matrix may further be reduced.

The carbonaceous material matrix may include, for example, crystalline carbon, amorphous carbon, or any combination thereof. The carbonaceous material matrix may include the first carbonaceous nanostructure, and the first carbonaceous nanostructure may include, for example, a crystalline carbon nanostructure, an amorphous carbon nanostructure, or any combination thereof. A carbonaceous material matrix formed of the crystalline carbon nanostructure may have high crystallinity. A carbonaceous material matrix formed of the amorphous carbon nanostructure may have low crystallinity. If (e.g., when) the carbonaceous material matrix includes, for example, the first carbonaceous nanostructures arranged in a direction, the carbonaceous material matrix may have high crystallinity. If (e.g., when) an amount of the first carbonaceous nanostructures arranged in a direction increases in the carbonaceous material matrix, crystallinity of the first negative active material layer 22 may increase. If (e.g., when) the carbonaceous material matrix includes, for example, the first carbonaceous nanostructures irregularly located, the carbonaceous material matrix may have low crystallinity. If (e.g., when) an amount of the irregularly located first carbonaceous nanostructures increases in the carbonaceous material matrix, crystallinity of the first negative active material layer 22 may decrease. Crystallinity of the carbonaceous material matrix may be determined by utilizing, for example, a Raman spectrum, an X-ray diffraction (XRD) spectrum, high-resolution transmission electron microscope, and/or the like.

The carbonaceous material matrix may include the first carbonaceous nanostructure, and the first carbonaceous nanostructure may be doped with, for example, a dopant. The dopant may include an n-type or kind dopant, a p-type or kind dopant, or any combination thereof. The n-type or kind dopant having more electrons than carbon may be a dopant utilized to introduce electrons into a carbonaceous material. The p-type or kind dopant having less electrons than carbon may be a dopant utilized to introduce holes into the carbonaceous material. The first carbonaceous nanostructure may include, for example, dopant-doped graphene. The doped graphene may include, for example, a n-type or kind dopant, a p-type or kind dopant, or any combination thereof. The dopant may include, for example, nitrogen (N), phosphorus (P), boron (B), sulfur (S), fluorine (F), chlorine (Cl), bromine (Br), germanium (Ge), gallium (Ga), or any combination thereof. For example, nitrogen (N) and phosphorus (P) may be n-type or kind dopants. For example, gallium (Ga) may be a p-type or kind dopant. An amount of the dopant included in the doped first carbonaceous nanostructure may be, for example, 3 at% or less, 2 at% or less, 1 at% or less, or 0.5 at% or less. Conductivity of the first carbonaceous nanostructure may further be improved because the first carbonaceous nanostructure is doped with the dopant. Internal resistance of the first negative active material layer 22 may decrease and interfacial resistance between the first negative active material layer 22 and the solid electrolyte layer 30 may further be reduced because the carbonaceous material matrix includes the doped first carbonaceous nanostructures. As a result, the all-solid secondary battery may have reduced internal resistance and further improved higher rate characteristics.

The carbonaceous material matrix may not include (e.g., may exclude) the binder. If (e.g., when) the carbonaceous material matrix does not include a binder, the first negative active material layer 22 may have reduced internal resistance and improved ionic conductivity and/or electronic conductivity. As a result, cycle characteristics such as higher rate characteristics of the all-solid secondary battery may be improved.

The carbonaceous material matrix may further include, for example, pores located in the carbonaceous material matrix. If (e.g., when) the carbonaceous material matrix includes a plurality of first carbonaceous nanostructures and the plurality of first carbonaceous nanostructures are irregularly located therein, pores defined by the plurality of first carbonaceous nanostructures may be formed in the carbonaceous material matrix. By including, for example, the first carbonaceous nanostructures arranged in a direction, the carbonaceous material matrix may have low porosity. If (e.g., when) an amount of the first carbonaceous nanostructures arranged in a direction increases in the carbonaceous material matrix, the number of pores included in the carbonaceous material matrix may decrease. Therefore, the first negative active material layer 22 may have reduced porosity. The porosity of the carbonaceous material matrix may increase because the carbonaceous material matrix includes, for example, the first carbonaceous nanostructures irregularly located. When an amount of the first carbonaceous nanostructures irregularly located in the carbonaceous material matrix increases, the number of pores included in the carbonaceous material matrix may increase. Therefore, the first negative active material layer 22 may include increased porosity. The porosity of the carbonaceous material matrix may be measured, for example, by a gas adsorption method.

The carbonaceous material matrix may be, for example, a lithium host. The carbonaceous material matrix may be, for example, an electrochemically inert lithium host. The electrochemically inert lithium host may be a lithium host acting as a conductor for electron conduction and/or a receptor for receiving plated lithium without forming a compound via reaction with lithium. Deterioration of the all-solid secondary battery 1 caused by changes of a volume and/or physical properties of the first negative active material layer 22 during charging and discharging may more effectively be inhibited because the carbonaceous material matrix acts as the electrochemically inert lithium host. Therefore, electron conduction and/or lithium plating may more effectively be performed in the first negative active material layer 22 because the carbonaceous material matrix acts as an electrochemically inert lithium host. In other embodiments, the carbonaceous material matrix may be, for example, an electrochemically active lithium host. The electrochemically active lithium host may be a lithium host reacting with lithium to form a compound. If (e.g., when) the carbonaceous material matrix acts as the electrochemically active lithium host, non-uniform plating of lithium may more effectively prevented or reduced in the first negative active material layer 22, and thus cycle characteristics of the all-solid secondary battery 1 may further be improved. Therefore, lithium may be uniformly plated in the first negative active material layer 22 because the carbonaceous material matrix acts as the electrochemically active lithium host. Lithium metal may be plated in the pores because the carbonaceous material matrix further has pores.

### Negative Electrode Layer: Negative Active Material

Referring to FIGS. 1 to 5, the negative electrode layer 20 may include: a negative current collector 21; and a first negative active material layer 22 disposed on the negative current collector 21. The first negative active material layer 22 may include a metallic negative active material located in the carbonaceous material matrix.

The metallic negative active material may be a negative active material capable of forming an alloy or compound with lithium. The metallic negative active material may include, for example, at least one alloy-forming element selected from among gold (Au), platinum (Pt), palladium (Pd), silicon (Si), silver (Ag), aluminum (Al), bismuth (Bi), tin (Sn), and zinc (Zn), but is not limited thereto, and any materials commonly utilized in the art as metallic negative active material capable of forming an alloy or compound with lithium may also be utilized. For example, nickel (Ni) may not be a metallic negative active material, because Ni does not form an alloy with lithium. For example, the metallic negative active material may not include (e.g., may exclude) a metal oxide. The metallic negative active material may include, for example, a metal capable of forming an alloy or compound with lithium, but may not include (e.g., may exclude) an oxide of the metal. The metallic negative active material may include, for example, silver (Ag), but may not include (e.g., may exclude) an oxide (e.g., Ag₂O) of silver (Ag).

The metallic negative active material may be, for example, a composite negative active material having a core/shell structure. The metallic negative active material may include: for example, a core; and a shell the disposed on the surface of the core. The shell may cover the core in whole or in part. The core may include, for example, a metal capable of forming an alloy or compound with lithium. The metal capable of forming an alloy or compound with lithium may include, for example, at least one ally-forming element selected from among gold (Au), platinum (Pt), palladium (Pd), silicon (Si), silver (Ag), aluminum (Al), bismuth (Bi), tin (Sn), and zinc (Zn). The shell may include, for example, a carbonaceous material. The shell may include, for example, a third carbonaceous nanostructure. The third carbonaceous nanostructure may be, for example, a carbonaceous nanostructure identical to the first carbonaceous nanostructure. The third carbonaceous nanostructure may include, for example, graphene, graphene oxide, reduced graphene oxide, or any combination thereof. The third carbonaceous nanostructure may be distinguished from the first carbonaceous nanostructure included in the carbonaceous material matrix in terms of the composition and physical properties such as thickness, position, and crystallinity. For example, the third carbonaceous nanostructure may constitute the shell of the metallic negative active material and may be distinguished from the carbonaceous material matrix. The metallic negative active material may have, for example, a structure including a metal core including a metal capable of forming an alloy or compound with lithium; and a shell including the third carbonaceous nanostructure disposed on the core. The metallic negative active material may have, for example, a structure including a metal core including a metal capable of forming an alloy or compound with lithium; and a shell including graphene disposed on the core. The shell may include, for example, amorphous carbon. If (e.g., when) the shell includes amorphous carbon, ion conduction and/or electron conduction between the core and the carbonaceous material matrix may more easily be performed. The shell may be, for example, a coating layer of amorphous carbon disposed on the core. The metallic negative active material may have, for example, a structure including: a metal core including a metal capable of forming an alloy or compound with lithium; and a shell including amorphous carbon disposed on the core. The metallic negative active material may have, for example, a structure including: a metal core including a metal capable of forming an alloy or compound with lithium; and an amorphous carbon coating layer disposed on the core.

The metallic negative active material may be, for example, in the form of particles. The metallic negative active material in the form of particles may have a particle diameter of, for example, about 2 µm or less, about 1.5 µm or less, about 1 µm or less, about 0.5 µm or less, or about 100 nm or less. The particle diameter of the metallic negative active material in the form of particles may be, for example, from about 1 nm to about 2 µm, from about 1 nm to about 1.5 µm, from about 5 nm to about 1 µm, from about 10 nm to about 500 nm, from about 10 nm to about 400 nm, from about 10 nm to about 200 nm, or from about 10 nm to about 100 nm. If (e.g., when) the metallic negative active material has a particle diameter within the ranges described above, reversible absorbing and/or desorbing of lithium may be performed more easily during charging and discharging. The metallic negative active material may be a reduced product of a metallic negative active material precursor. The metallic negative active material may be a reduced product of a metal ion. The metallic negative active material may be distributed in a uniformly dispersed state without aggregating because the metallic negative active material is a reduced product of the metal ion. The particle diameter of the metallic negative active material may be, for example, an arithmetic average of particle diameters of the metallic negative active material obtained by analyzing cross-sectional images of the first negative active material layer 22 obtained by an electron microscope utilizing software or manually. Particles of the metallic negative active material may include a core and a shell disposed on the surface of the core. A particle diameter of the core may be, for example, from about 1 nm to about 1 µm, from about 10 nm to about 500 nm, from about 10 nm to about 400 nm, from about 10 nm to about 300 nm, from about 10 nm to about 200 nm, or from about 10 nm to about 100 nm. The shell may have a thickness of, for example, 100 nm or less, 50 nm or less, 40 nm or less, 30 nm or less, 20 nm or less, or 10 nm or less. The thickness of the shell may be, for example, from about 1 nm to about 100 nm, from about 1 nm to about 50 nm, from about 1 nm to about 40 nm, from about 1 nm to about 30 nm, from about 1 nm to about 20 nm, or from about 1 nm to about 10 nm. If (e.g., when) the particle diameters and the thicknesses of the core and the shell are within the ranges described above, cycle characteristics of the all-solid secondary battery 1 including particles of the metallic negative active material may be improved.

An amount of the metallic negative active material may be 10 parts by weight or less, 5 parts by weight or less, 3 parts by weight or less, or 2 parts by weight or less based on 100 parts by weight of the carbonaceous material matrix. The amount of the metallic negative active material may be from about 0.1 parts by weight to about 10 parts by weight, from about 0.5 parts by weight to about 5 parts by weight, from about 0.5 parts by weight to about 3 parts by weight, or from about 0.5 parts by weight to about 2 parts by weight based on 100 parts by weight of the carbonaceous material matrix. Cycle characteristics of the all-solid secondary battery 1 may further be improved because the amount of the metallic negative active material is within the range described above. In comparison with comparable first negative active material layers including a simple blend of the metallic negative active material and the carbonaceous material, the first negative active material layer 22 utilized in the all-solid secondary batteries 1 of FIGS. 1 to 5 may have a reduced amount of the metallic negative active material. An all-solid secondary battery 1 having excellent or suitable cycle characteristics with a relatively low amount of the metallic negative active material may be provided because the first negative active material layer 22 includes the metallic negative active material dispersed in the carbonaceous material matrix by a dry method.

The carbonaceous material matrix may further include a carbonaceous negative active material located in the carbonaceous material matrix. The carbonaceous negative active material may be, for example, amorphous carbon. The amorphous carbon may be, for example, carbon black (CB), acetylene black (AB), furnace black (FB), or Ketjen black (KB), but is not limited thereto, and any carbon classified as amorphous carbon in the art may also be utilized. Amorphous carbon may be carbon that does not have crystallinity or has very low crystallinity and may be distinguished from crystalline carbon or graphite-based carbon. The carbonaceous negative active material may not need to be provided (e.g., may be excluded).

### Negative Electrode Layer: First Negative Active Material Layer

A thickness of the first negative active material layer 22 may be, for example, 50 % or less, 40 % or less, 30 % or less, 20 % or less, 10 % or less, or 5 % or less of a thickness of the positive active material layer 12. The thickness of the first negative active material layer 22 may be, for example, 20 µm or less, 10 µm or less, 7 µm or less, or 5 µm or less. The thickness of the first negative active material layer 22 may be, for example, from about 1 µm to about 20 µm, from about 2 µm to about 10 µm, from about 2 µm to about 7 µm, or from about 2 µm to about 5 µm. If (e.g., when) the first negative active material layer 22 is too thin, lithium dendrite formed between the first negative active material layer 22 and the negative current collector 21 may break the first negative active material layer 22, making it difficult to improve cycle characteristics of the all-solid secondary battery 1. If (e.g., when) the first negative active material layer 22 is too thick, energy density of the all-solid secondary battery 1 may decrease, internal resistance of the all-solid secondary battery 1 may be increased by the first negative active material layer 22, making it difficult to improve cycle characteristics of the all-solid secondary battery 1.

If (e.g., when) the thickness of the first negative active material layer 22 decreases, a charging capacity of the first negative active material layer 22 may also decrease. The charging capacity of the first negative active material layer 22 may be, for example, 50 % or less, 40 % or less, 30 % or less, 20 % or less, 10 % or less, 5 % or less, or 2 % or less of a charging capacity of the positive active material layer 12. The charging capacity of the first negative active material layer 22 may be, for example, from about 0.1 % to about 50 %, from about 0.1 % to about 40 %, from about 0.1 % to about 30 %, from about 0.1 % to about 20 %, from about 0.1 % to about 10%, from about 0.1 % to about 5 %, or from about 0.1 % about to 2 % based on the charging capacity of the positive active material layer 12. If (e.g., when) the charging capacity of the first negative active material layer 22 is too low, the thickness of the first negative active material layer 22 may become too small, and thus lithium dendrite formed between the first negative active material layer 22 and the negative current collector 21 during repeated charging and discharging processes may break the first negative active material layer 22, making it difficult to improve cycle characteristics of the all-solid secondary battery 1. If (e.g., when) the charging capacity of the first negative active material layer 22 is too high, energy density of the all-solid secondary battery 1 may decrease, and thus internal resistance of the all-solid secondary battery 1 may be increased by the first negative active material layer 22, making it difficult to improve cycle characteristics of the all-solid secondary battery 1. A ratio (C1/C2) of the charging capacity C1 of the first negative active material layer 22 to the charging capacity C2 of the positive active material layer 12 may be, for example, from about 0.001 to about 0.45, from about 0.001 to about 0.4, from about 0.001 to about 0.3, from about 0.001 to about 0.25, from about 0.001 to about 0.2, from about 0.001 to about 0.1, from about 0.001 to about 0.05, or from about 0.001 to about 0.02. The charging capacity of the positive active material layer 12 may be obtained by multiplying a charging capacity density (mAh/g) of the positive active material by a mass of the positive active material of the positive active material layer 12. If (e.g., when) one or more suitable types (kinds) of positive active materials are utilized, charging capacity density×mass values of all of the positive active materials may be calculated respectively, and a sum of the values may be regarded as the charging capacity of the positive active material layer 12. The charging capacity of the first negative active material layer 22 may be calculated in substantially the same manner. For example, the charging capacity of the first negative active material layer 22 may be obtained by multiplying a charging capacity density (mAh/g) of the negative active material by a mass of the negative active material of the first negative active material layer 22. If (e.g., when) one or more suitable types (kinds) of negative active materials are utilized, charging capacity density×mass values of all of the negative active materials may be calculated respectively, and a sum of the values may be regarded as the charging capacity of the first negative active material layer 22. For example, the charging capacity densities of the positive active material and the negative active material may be capacities estimated utilizing all-solid half-cells to which lithium metal is applied as a counter electrode. The charging capacities of the positive active material layer 12 and the first negative active material layer 22 may directly be measured utilizing the all-solid half-cells. The charging capacity density may be calculated by dividing the measured charging capacity by the mass of each active material. In some embodiments, the charging capacity of the positive active material layer 12 and the first negative active material layer 22 may be an initial charging capacity measured during charging of a first cycle.

The first negative active material layer 22 may be free from a binder. The first negative active material layer 22 may not include (e.g., may exclude) a binder because the first negative active material layer 22 is formed by a dry method. The first negative active material layer 22 may have improved electronic conductivity and/or ionic conductivity and reduced internal resistance because the first negative active material layer 22 does not include a binder. Therefore, cycle characteristics, such as higher rate characteristics, of the all-solid secondary battery 1 including the first negative active material layer 22 may be improved. The first negative active material layer may be prepared by a dry method such as chemical vapor deposition (CVD) or physical vapor deposition (PVD). The dry method utilized to form the first negative active material layer is not limited and any dry methods without utilizing a binder commonly utilized in the art may also be utilized.

The first negative active material layer 22 may have a thickness greater than that of the first protective layer 23 (23a and 23b). The thickness of the first negative active material layer 22 may be 150 % or more, 200 % or more, 300 % or more, or 500 % or more than that of the first protective layer 23 (23a and 23b). If (e.g., when) the first negative active material layer 22 has a thickness within the ranges described above, the thickness of the first protective layer 23 (23a and 23b) relatively decreases, and thus energy density of the all-solid secondary battery may further be improved.

In a Raman spectrum of the negative electrode layer 20, a peak intensity ratio (I_{D}/I_{G}) of D-band peak intensity (I_{D}) at about 1350 cm⁻¹ derived from amorphous carbon to G-band peak intensity (I_{G}) at about 1580 cm⁻¹ derived from crystalline carbon may be, for example, about 20 or less, about 15 or less, about 10 or less, about 5 or less, about 3 or less, about 2 or less, about 1 or less, about 0.8 or less, or about 0.5 or less.

In the Raman spectrum of the negative electrode layer 20, the peak intensity ratio (I_{D}/I_{G}) of D-band peak intensity (I_{D}) at about 1350 cm⁻¹ derived from amorphous carbon to G-band peak intensity (I_{G}) at about 1580 cm⁻¹ derived from crystalline carbon may be, for example, greater than about 0, about 0.01 or more, about 0.05 or more, about 0.1 or more, about 0.3 or more, about 0.5 or more, or about 1 or more.

In the Raman spectrum of the negative electrode layer 20, the peak intensity ratio (I_{D}/I_{G}) of D-band peak intensity (I_{D}) at about 1350 cm⁻¹ derived from amorphous carbon to G-band peak intensity (I_{G}) at about 1580 cm⁻¹ derived from crystalline carbon may be, for example, greater than about 0 to but not more than about 20, greater than about 0 but not more than about 15, greater than about 0 but not more than about 10, from about 0.01 to about 10, from about 0.01 to about 5, from about 0.1 to about 5, from about 0.1 to about 3, or from about 0.1 to about 1. In the Raman spectrum of the negative electrode layer 20, the peak intensity ratio (I_{D}/I_{G}) of D-band peak intensity (I_{D}) at about 1350 cm⁻¹ derived from amorphous carbon to G-band peak intensity (I_{G}) at about 1580 cm⁻¹ derived from crystalline carbon may be, for example, from about 0.1 to about 10, from about 0.5 to about 5, from about 1 to about 3, or from about 1 to about 2. In the Raman spectrum of the negative electrode layer 20, the peak intensity ratio (I_{D}/I_{G}) of D-band peak intensity (I_{D}) at about 1350 cm⁻¹ derived from amorphous carbon to G-band peak intensity (I_{G}) at about 1580 cm⁻¹ derived from crystalline carbon may be, for example, from about 0.5 to about 10, from about 1 to about 5, from about 2 to about 5, or from about 3 to about 5. The Raman spectrum may be obtained from the first negative active material layer 22 and the first protective layer 23 of the negative electrode layer 20. If (e.g., when) the negative electrode layer 20 has the peak intensity ratio within the ranges described above, deterioration of the negative current collector 21 caused by the solid electrolyte may be inhibited more effectively. If (e.g., when) the peak intensity ratio of the negative electrode layer 20 excessively increases, it may be difficult to effectively prevent or reduce deterioration of the negative current collector 21 caused by the solid electrolyte. A negative electrode layer 20 including a nickel negative current collector 21 may have a relatively lower peak intensity ratio than that of the negative electrode layer 20 including a copper negative current collector 21.

A porosity of the negative electrode layer 20 obtained by utilizing a nitrogen gas adsorption method (multi-point BET) may be, for example, about 30 % or less, about 20 % or less, about 15 % or less, about 10 % or less, about 5 % or less, about 3 % or less, about 2 % or less, about 1 % or less, about 0.8 % or less, or about 0.5 % or less.

The porosity of the negative electrode layer 20 obtained by utilizing the nitrogen gas adsorption method (multi-point BET) may be, for example, greater than about 0 %, about 0.1 % or more, or about 0.5 % or more.

The porosity of the negative electrode layer 20 obtained by utilizing the nitrogen gas adsorption method (multi-point BET) may be, for example, greater than about 0 % but not more than about 30 %, greater than about 0 % but not more than about 20 %, from about 0.01 % to about 10 %, from about 0.1 % to about 5 %, from about 0.5 % to about 5 %, or from about 1 % to about 5 %. The porosity of the negative electrode layer 20 obtained by utilizing the nitrogen gas adsorption method (multi-point BET) may be, for example, from about 0.1 % to about 20 %, from about 1 % to about 10 %, or from about 5 % to about 10 %. The porosity of the negative electrode layer 20 obtained by utilizing the nitrogen gas adsorption method (multi-point BET) may be, for example, from about 1 % to about 20 %, from about 5 % to 20 %, or from about 10 % to 20 %. If (e.g., when) the porosity of the negative electrode layer 20 is within the ranges described above, deterioration of the negative current collector 21 caused by the solid electrolyte may be prevented or reduced more effectively. If (e.g., when) the porosity of the negative electrode layer 20 excessively increases, it may be difficult to effectively prevent or reduce deterioration of the negative current collector 21 caused by the solid electrolyte.

### Negative Electrode Layer: First Protective Layer

Referring to FIGS. 1 to 5, the negative electrode layer 20 may include: a negative current collector 21; a first negative active material layer 22; and a first protective layer 23 (23a and 23b) disposed between the negative current collector 21 and the first negative active material layer 22.

The first protective layer 23 (23a and 23b) may be, for example, a conductive coating layer including a carbonaceous material. By utilizing the first protective layer 23 (23a and 23b) as a conductive coating layer, an increase in internal resistance of the all-solid secondary battery may be inhibited although the first protective layer 23 (23a and 23b) is added. The first protective layer 23 (23a and 23b) includes, for example, a second carbonaceous nanostructure. The carbonaceous nanostructure may have a nano-scale dimension and may be a structure formed of a carbonaceous material. The carbon nanostructure may include, for example, a one-dimensional carbon nanostructure, a two-dimensional carbon nanostructure, a three-dimensional carbon nanostructure, or any combination thereof. The second carbonaceous nanostructure may include, for example, a two-dimensional nanostructure. The second carbonaceous nanostructure may include, for example, graphene, graphene oxide (GO), reduced graphene oxide (rGO), or any combination thereof. The second carbonaceous nanostructure may be selected from the previously-described first carbonaceous nanostructures. The second carbonaceous nanostructure may be doped with a dopant. The dopant-doped second carbonaceous nanostructure may be selected from the first carbonaceous nanostructures doped with a dopant.

The first protective layer 23 (23a and 23b) may include, for example, the second carbonaceous nanostructure arranged in a direction with respect to the surface of the negative current collector 21. The second carbonaceous nanostructure may include, for example, graphene. The first protective layer 23 (23a and 23b) may include graphene arranged in a direction with respect to the surface of the negative current collector 21.

The first protective layer 23 (23a and 23b) may include, for example, the second carbonaceous nanostructures arranged in a direction parallel to the surface of the negative current collector 21. The second carbonaceous nanostructure may be arranged in a direction parallel to the surface of the negative current collector 21. The first protective layer 23 (23a and 23b) may include, for example, graphene. The first protective layer 23 (23a and 23b) may include graphene arranged in a direction parallel to the surface of the negative current collector 21. The graphene may be arranged, for example, at an angle of about -30° to about 30°, about -20° to about 20°, about -10° to about 10°, or about -5° to about 5° with the surface of the negative current collector 21. The contact between the solid electrolyte and the negative current collector 21 may be inhibited more effectively because the second carbonaceous nanostructures is arranged in a direction parallel to the surface of the negative current collector 21 in the first protective layer 23 (23a and 23b).

The first protective layer 23 (23a and 23b) may include, for example, the second carbonaceous nanostructures arranged in a direction protruding from the surface of the negative current collector 21. The second carbonaceous nanostructures may be arranged in a direction protruding from the surface of the negative current collector 21. The first protective layer 23 (23a and 23b) may include, for example, graphene. The first protective layer 23 (23a and 23b) may include graphene arranged in a direction protruding from the surface of the negative current collector 21. The second carbonaceous nanostructure may be arranged, for example, at an angle of about 45° to about 135°, about 50° to about 130°, about 60° to about 120°, about 70° to about 110°, or about 80° to about 100° with respect to the surface of the negative current collector 21. The second carbonaceous nanostructure may be arranged, for example, to be substantially perpendicular or normal to the surface of the negative current collector 21. If (e.g., when) the second carbonaceous nanostructures may be arranged in the direction protruding from the surface of the negative current collector 21 in the first protective layer 23 (23a and 23b), electron conduction between the first negative active material layer 22 and the negative current collector 21 may be performed more easily. As a result, an increase in internal resistance in the all-solid secondary battery 1 may be inhibited more effectively.

The first protective layer 23 (23a and 23b) may have a structure in which the second carbonaceous nanostructure is stacked in a thickness direction of the first protective layer 23 (23a and 23b). In the first protective layer 23 (23a and 23b), a plurality of second carbonaceous nanostructures may be stacked along the thickness direction of the first protective layer 23 (23a and 23b). The first protective layer 23 (23a and 23b) may include, for example, a plurality of second carbonaceous nanostructure layers stacked in the thickness direction of the first protective layer 23 (23a and 23b). Structural density and structural stability of the first protective layer 23 (23a and 23b) may further be improved because the second carbonaceous nanostructures are stacked in the thickness direction of the negative current collector 21 in the first protective layer 23 (23a and 23b). The second carbonaceous nanostructure may be stacked, for example, up to about 2000 layers, up to about 1500 layers, up to about 1000 layers, up to about 500 layers, up to about 100 layers, up to about 70 layers, up to about 50 layers, or up to about 30 layers in the first protective layer 23 (23a and 23b). The second carbonaceous nanostructures may be stacked, for example, from about 1 layer to about 100 layers, from about 5 layers to about 70 layers, from about 10 layers to about 50 layers, or from about 20 layers to about 30 layers in the first protective layer 23 (23a and 23b). The second carbonaceous nanostructures may be stacked, for example, from about 1 layer to about 2000 layers, from about 10 layers to about 1000 layers, from about 100 layers to about 1000 layers, from about 100 layers to about 500 layers, or from about 100 layers to about 300 layers in the first protective layer 23 (23a and 23b). The second carbonaceous nanostructures may be stacked, for example, from about 1 layer to about 2000 layers, from about 10 layers to about 2000 layers, from about 100 layers to about 2000 layers, from about 500 layers to about 2000 layers, or from about 1000 layers to about 2000 layers in the first protective layer 23 (23a and 23b). Structural stability of the first protective layer 23 (23a and 23b) may further be improved because the number of stacked layers of the second carbonaceous nanostructure is within the ranges above.

The first protective layer 23 (23a and 23b) may directly be disposed on one side of the negative current collector 21. The first protective layer 23 (23a and 23b) may be inert to a solid electrolyte, for example, a sulfide-based solid electrolyte. The contact between the negative current collector 21 and the sulfide-based solid electrolyte may be blocked by directly disposing the first protective layer 23 (23a and 23b) on one side of the negative current collector 21, and thus deterioration, such as corrosion, of the negative current collector 21 may be prevented or reduced more effectively.

The first protective layer 23 (23a and 23b) may be disposed, for example, on one side of the negative current collector 21 facing the solid electrolyte layer. The first protective layer 23 (23a and 23b) may also be disposed on the other side of the negative current collector 21 opposing to the one side of the negative current collector 21 and may also be disposed on side surfaces of the negative current collector 21 between the one side and the other sides. Deterioration caused by the sulfide-based solid electrolyte may more effectively be inhibited because the first protective layer 23 (23a and 23b) convers the negative current collector 21 in part or in whole. Therefore, lifespan characteristics of the all-solid secondary battery 1 including the first protective layer 23 (23a and 23b) may be improved.

The first protective layer 23 (23a and 23b) may have a thickness of, for example, about 5 µm or less, about 3 µm or less, about 2 µm or less, about 1.5 µm or less, about 1 µm or less, about 500 nm or less, about 300 nm or less, or about 100 nm or less. The thickness of the first protective layer 23 (23a and 23b) may be, for example, at least a thickness of a single graphene layer, about 1 nm or more, about 10 nm or more, about 20 nm or more, about 50 nm or more, or about 100 nm or more. The thickness of the first protective layer 23 (23a and 23b) may be, for example, from about the thickness of the single graphene layer to about 2 µm, from about 10 nm to about 1.5 µm, from about 50 nm to about 1 µm, from about 100 nm to about 900 nm, from about 200 nm to about 800 nm, or from about 300 nm to about 700 nm. The thickness of the first protective layer 23 (23a and 23b) may be, for example, from about the thickness of the single graphene layer to about 2 µm, from about 1 nm to about 1.5 µm, from about 5 nm to about 1 µm, from about 10 nm to about 500 nm, from about 20 nm to about 300 nm, or from about 20 nm to about 100 nm. If (e.g., when) the first protective layer 23 (23a and 23b) is too thick, the all-solid secondary battery may have increased internal resistance and decreased energy density. If (e.g., when) the first protective layer 23 (23a and 23b) is too thin, it may be difficult to effectively prevent or reduce side reactions between the negative current collector 21 and the solid electrolyte.

The first protective layer 23 (23a and 23b) may be free from a binder. The first protective layer 23 (23a and 23b) may not include (e.g., may exclude) a binder because the first protective layer 23 (23a and 23b) is formed by a dry method. The first protective layer 23 (23a and 23b) may have improved electronic conductivity and reduced internal resistance because the first protective layer 23 (23a and 23b) does not include a binder. Therefore, the all-solid secondary battery 1 including the first protective layer 23 (23a and 23b) may have improved cycle characteristics, such as higher rate characteristics. The first protective layer 23 (23a and 23b) may be prepared by a dry method such as CVD and PVD. The dry method utilized to form the first protective layer 23 (23a and 23b is not limited and any dry methods without utilizing a binder commonly utilized in the art may also be utilized. The first protective layer 23 (23a and 23b) may be formed of, for example, the second carbonaceous nanostructure and may not include (e.g., may exclude) a binder. The first protective layer 23 (23a and 23b) may be formed of, for example, graphene, and may not include (e.g., may exclude) a binder.

### Negative Electrode Layer: Negative Current Collector

The negative current collector 21 may be formed of, for example, a material that does not react with lithium, i.e., a material that does not form an alloy and compound with lithium. A material utilized to form the negative current collector 21 may be, for example, copper (Cu), indium (In), magnesium (Mg), titanium (Ti), iron (Fe), cobalt (Co), nickel (Ni), zinc (Zn), aluminum (Al), germanium (Ge), or chromium (Cr), but is not limited thereto, and any materials commonly utilized in the art as an electrode current collector may also be utilized. The negative current collector 21 may be formed of one metal selected from those described above or an alloy or coating material of two or more metals selected therefrom. The negative current collector 21 may be, for example, in the form of a plate or foil.

The negative current collector 21 may include, for example, a base film and a metal layer disposed on at least one side (e.g., one or both (e.g., opposite) sides) of the base film. The base film may include, for example, a polymer. The polymer may be, for example, a thermoplastic polymer. The polymer may include, for example, polyethyleneterephthalate (PET), polyethylene (PE), polypropylene (PP), polybutyleneterephthalate (PBT), polyimide (PI), or any combination thereof. If (e.g., when) a short circuit occurs, the base film including the thermoplastic polymer melts, and thus a rapid current increase may be inhibited. The base film may be, for example, an insulator. The metal layer may include, for example, indium (In), copper (Cu), magnesium (Mg), titanium (Ti), iron (Fe), cobalt (Co), nickel (Ni), zinc (Zn), aluminum (Al), germanium (Ge), or an alloy thereof. The metal layer may include, for example, copper (Cu), titanium (Ti), iron (Fe), cobalt (Co), nickel (Ni), or an alloy thereof. The metal layer may act as an electrochemical fuse to be cut if (e.g., when) an overcurrent occurs, thereby preventing or reducing a short circuit. By controlling a thickness of the metal layer, a limiting current and a maximum current may be adjusted. The metal layer may be plated or deposited on the base film. If (e.g., when) the thickness of the metal layer decreases, the limiting current and/or maximum current of the negative current collector 21 decreases, so that stability of the lithium battery may be improved at a short circuit. A lead tab may be added onto the metal layer for connection with the outside. The lead tab may be welded to the metal layer or a metal layer/base film stack structure by ultrasonic welding, laser welding, spot welding, and/or the like. While the base film and/or the metal layer melts during welding, the metal layer may be electrically connected to the lead tab. A metal chip may further be added between the metal layer and the lead tab for stronger welding between the metal layer and the lead tab. The metal chip may be a chip of the same material as the metal of the metal layer. The metal chip may be, for example, metal foil and metal mesh. The metal chip may be, for example, copper foil and nickel foil. By disposing the metal chip on the metal layer and performing welding, the lead tab may be welded to a metal chip/metal layer stack structure or a metal chip/metal layer/base film stack structure. While the base film, the metal layer, and/or the metal chip melt during welding, the metal layer or the metal layer/metal chip stack structure may be electrically connected to the lead tab. A metal chip and/or a lead tab may further be added to a portion of the metal layer. The base film may have a thickness of, for example, about 1 µm to about 50 µm, about 1.5 µm to about 50 µm, about 1.5 µm to about 40 µm, or about 1 µm to about 30 µm. If (e.g., when) the thickness of the base film is within the previously-described ranges, the weight of the electrode assembly may be reduced more effectively. A melting point of the base film may be, for example, from about 100 °C to about 300 °C, from about 100 °C to about 250 °C, or from about 100 °C to about 200 °C. If (e.g., when) the base film has a melting point within the previously-described ranges, the base film may melt during a process of welding the lead tab to be easily bound to the lead tab. To improve adhesion between the base film and the metal layer, surface treatment such as corona treatment may be performed on the base film. A thickness of the metal layer may be, for example, from about 0.01 µm to about 3 µm, from about 0.1 µm to about 3 µm, from about 0.1 µm to about 2 µm, or from about 0.1 µm to about 1 µm. If (e.g., when) the thickness of the metal layer is within the previously-described ranges, stability of the electrode assembly may be obtained while maintaining conductivity thereof. A thickness of the metal chip may be, for example, from about 2 µm to about 10 µm, from about 2 µm to about 7 µm, or from about 4 µm to about 6 µm. If (e.g., when) the thickness of the metal chip is within the previously-described ranges, the metal layer may be connected to the lead tab more easily. If (e.g., when) the negative current collector 21 has the previously-described structure, the weight of the negative electrode may be reduced, so that energy density of the all-solid secondary battery may be increased.

The negative current collector 21 may further include, for example, a thin film including elements capable of forming an alloy with lithium on the negative current collector 21. The thin film may be disposed between the negative current collector 21 and the first negative active material layer 22. The thin film may include, for example, an element capable of forming an alloy with lithium. Examples of the element capable of forming an alloy with lithium may include gold, silver, zinc, tin, indium, silicon, aluminum, and bismuth, but are not limited thereto, and any elements capable of forming an alloy with lithium suitable in the art may also be utilized. The thin film may be formed of any one of the metals or an alloy of one or more suitable types (kinds) of metals. By disposing the thin film on a surface of the negative current collector 21, the second negative active material layer plated between the thin film and the first negative active material layer 22 may become flatter, thereby further improving cycle characteristics of the all-solid secondary battery 1. The thin film may be disposed between the first protective layer 23 and the first negative active material layer 22 or between the first protective layer 23 and the negative current collector 21.

The thickness of the thin film may be, for example, from about 1 nm to about 800 nm, from about 10 nm to about 500 nm, or from about 50 nm to about 100 nm. If (e.g., when) the thickness of the thin film is less than about 1 nm, the function of the thin film may be difficult to obtain. If (e.g., when) the thin film is too thick, the thin film may irreversibly absorb lithium and thus an amount of plated lithium may be reduced in the negative electrode layer 20. As a result, substantial energy density of the all-solid secondary battery 1 may decrease and cycle characteristics of the all-solid secondary battery 1 may deteriorate. The thin film may be formed on the negative current collector 21, for example, by vacuum deposition, sputtering, or plating. However, the method is not limited thereto and any method capable of forming a thin film and commonly utilized in the art may also be utilized.

### Negative Electrode Layer: Second Negative Active Material Layer

In some embodiments, the all-solid secondary battery 1 may further include, for example, a second negative active material layer disposed between the solid electrolyte layer 30 and the negative current collector 21 by charging. The second negative active material layer may be disposed, for example, at one or more positions between the first negative active material layer 22 and the first protective layer 23 (23a and 23b) and between the first negative active material layer 22 and the solid electrolyte layer 30. The all-solid secondary battery 1 may further include, for example, a second negative active material layer disposed between the first negative active material layer 22 and the first protective layer 23 (23a and 23b). The all-solid secondary battery 1 may further include, for example, the second negative active material layer disposed between the first negative active material layer 22 and the solid electrolyte layer 30. The second negative active material layer may be plated between the first negative active material layer 22 and the first protective layer 23 (23a and 23b) during a charging and discharging process of the all-solid secondary battery 1.

The second negative active material layer may be a metal layer including lithium or a lithium alloy. The metal layer may include lithium or a lithium alloy. Therefore, the second negative active material layer, as a metal layer including lithium, serves as a reservoir of lithium. The lithium alloy may be, for example, an Li-Al alloy, an Li-Sn alloy, an Li-In alloy, an Li-Ag alloy, an Li-Au alloy, an Li-Zn alloy, an Li-Ge alloy, or an Li-Si alloy, but is not limited thereto, and any lithium alloys available in the art may also be utilized. The second negative active material layer may be formed of one of the alloys alone, lithium, or a combination of one or more suitable types (kinds) of alloys. The second negative active material layer may be, for example, a plated layer.

A thickness of the second negative active material layer is not limited, but may be, for example, from about 1 µm to about 200 µm, from about 1 µm to about 150 µm, from about 1 µm to about 100 µm, or from about 1 µm to about 50 µm. If (e.g., when) the second negative active material layer is too thin, the function of the second negative active material layer as a reservoir of lithium may be difficult to obtain. If (e.g., when) the second negative active material layer is too thick, the mass and volume of the all-solid secondary battery 1 may increase, and thus cycle characteristics of the all-solid secondary battery 1 may deteriorate. The second negative active material layer may be, for example, a metal foil having a thickness within the ranges described above.

In the all-solid secondary battery 1, the second negative active material layer may be, for example, disposed between the negative current collector 21 and the solid electrolyte layer 30 before assembling the all-solid secondary battery 1 or plated between the negative current collector 21 and the solid electrolyte layer 30 after assembling and charging the all-solid secondary battery 1. In the all-solid secondary battery 1 including the second negative active material layer disposed between the negative current collector 21 and the solid electrolyte layer 30 before assembling the all-solid secondary battery 1, the second negative active material layer, as a metal layer including lithium, may act as a lithium reservoir. For example, a lithium foil may be disposed between the negative current collector 21 and the solid electrolyte layer 30 before assembling the all-solid secondary battery 1. As a result, cycle characteristics of the all-solid secondary battery 1 including the second negative active material layer may further be improved. In the all-solid secondary battery 1 including the second negative active material layer plated by charging, energy density of the all-solid secondary battery 1 may increase because the second negative active material layer is not included while the all-solid secondary battery is assembled. For example, while the all-solid secondary battery 1 is charged, charging may be performed to exceed a charging capacity of the first negative active material layer 22. For example, the first negative active material layer 22 may be overcharged. During initial charging, lithium may be absorbed to the first negative active material layer 22. The negative active material included in the first negative active material layer 22 may form an alloy or compound with lithium ions that have migrated from the positive electrode layer 10. If (e.g., when) the first negative active material layer 22 is overcharged to exceed the capacity thereof, lithium may be plated, for example, on a front surface and/or a rear surface of the first negative active material layer 22, i.e., between the first negative active material layer 22 and the first protective layer 23 (23a and 23b) and/or between the first negative active material layer 22 and the solid electrolyte layer 30, and a metal layer corresponding to the second negative active material layer may be formed by the plated lithium. The second negative active material layer may be a metal layer mainly composed of lithium (i.e., lithium metal). These results may be obtained because the negative active material included in the first negative active material layer 22 includes a material capable of forming an alloy or compound with lithium. During discharging, lithium of the first negative active material layer 22 and the second negative active material layer, i.e., the metal layer, is ionized to migrate in a direction toward the positive electrode layer 10. Therefore, lithium may be utilized as a negative active material in the all-solid secondary battery 1. For example, if (e.g., when) the first negative active material layer 22 is disposed between the solid electrolyte layer 30 and the second negative active material layer, the first negative active material layer 22 may cover the second negative active material layer, acting as a protective layer of the second negative active material layer, i.e., metal layer, and inhibiting the growth of lithium dendrite. Therefore, a short circuit and capacity reduction may be inhibited in the all-solid secondary battery 1, and thus cycle characteristics of the all-solid secondary battery 1 may be improved. For example, if (e.g., when) the second negative active material layer is disposed by charging after assembling the all-solid secondary battery 1, a region between the negative current collector 21 and the solid electrolyte layer 30 may be a Li-free region not including lithium (Li) in the early state of charging or after discharging the all-solid secondary battery.

### Solid Electrolyte Layer

### Solid Electrolyte Layer: Sulfide-based Solid Electrolyte

Referring to FIGS. 1 to 5, the solid electrolyte layer 30 may be disposed between the positive electrode layer 10 and the negative electrode layer 20. The solid electrolyte layer 30 may include a sulfide-based solid electrolyte.

The sulfide-based solid electrolyte included in the solid electrolyte layer 30 may include, for example, at least one selected from among Li₂S-P₂S₅, Li₂S-P₂S₅-LiX, wherein X is a halogen atom, Li₂S-P₂S₅-Li₂O, Li₂S-P₂S₅-Li₂O-LiI, Li₂S-SiS₂, Li₂S-SiS₂-Lil, Li₂S-SiS₂-LiBr, Li₂S-SiS₂-LiCl, Li₂S-SiS₂-B₂S₃-LiI, Li₂S-SiS₂-P₂Ss-LiI, Li₂S-B₂S₃, Li₂S-P₂S₅-ZₘSₙ, wherein m and n are positive numbers and Z is Ge, Zn, or Ga, Li₂S-GeS₂, Li₂S-SiS₂-Li₃PO₄, Li₂S-SiS₂-LiₚMO_{q}, wherein p and q are positive numbers and M is P, Si, Ge, B, Al, Ga, or In, Li₃PS₄, Li₇P₃S₁₁, Li₇₋ₓPS₆₋ₓClₓ, wherein 0≤x≤2, Li₇₋ₓPS₆₋ₓBrₓ, wherein 0≤x≤2, and Li₇₋ₓPS₆₋ₓIₓ, wherein 0≤x≤2. The sulfide-based solid electrolyte may be prepared by treating a starting material such as Li₂S and P₂S₅ by melt quenching or mechanical milling. Heat treatment may be performed after such treatment. The solid electrolyte may be in an amorphous state, a crystalline state, or a mixed state thereof. For example, the solid electrolyte may include, for example, sulfur (S), phosphorus (P), and lithium (Li) as components among materials for the previously-described sulfide-based solid electrolyte. For example, the solid electrolyte may be a material including Li₂S-P₂S₅. If (e.g., when) the material including Li₂S-P₂S₅ is utilized as the sulfide-based solid electrolyte material constituting the solid electrolyte, a mixing molar ratio of Li₂S to P₂S₅ may be, for example, from about 50:50 to about 90:10. The sulfide-based solid electrolyte may include, for example, an argyrodite type or kind (e.g., an argyrodite) solid electrolyte represented by Formula A.

**Formula A** **Li⁺₁₂₋ₙ₋ₓAⁿ⁺X²⁻₆₋ₓY⁻ₓ**

In Formula A, A may be P, As, Ge, Ga, Sb, Si, Sn, Al, In, Ti, V, Nb, or Ta, X may be S, Se, or Te, and Y may be Cl, Br, I, F, CN, OCN, SCN, or N₃, wherein 1≤n≤5 and 0≤x≤2. The sulfide-based solid electrolyte may be an argyrodite-type or kind compound including, for example, at least one selected from among Li₇₋ₓPS₆₋ₓClₓ, wherein 0≤x≤2, Li₇₋ₓPS₆₋ₓBrₓ, wherein 0≤x≤2, and Li₇₋ₓPS₆₋ₓIₓ, wherein 0≤x≤2. The sulfide-based solid electrolyte may be an argyrodite-type or kind compound including, for example, at least one selected from among Li₆PS₅Cl, Li₆PS₅Br, and Li₆PS₅I. The argyrodite-type or kind solid electrolyte may have a density of about 1.5 g/cc to about 2.0 g/cc. Internal resistance of the all-solid secondary battery may be reduced and penetration of the solid electrolyte layer may be effectively inhibited because the argyrodite-type or kind solid electrolyte has a density of about 1.5 g/cc or more.

The sulfide-based solid electrolyte may have, for example, a Young's modulus of about 40 GPa or less. The Young's modulus of the sulfide-based solid electrolyte may be, for example, from about 5 GPa to about 40 GPa, from about 10 GPa to about 40 GPa, or from about 15 GPa to about 30 GPa.

An average particle diameter of the sulfide-based solid electrolyte included in the solid electrolyte layer 30 may be, for example, from about 1 µm to about 50 µm, from about 3 µm to about 30 µm, or from about 3 µm to about 20 µm. If (e.g., when) the sulfide-based solid electrolyte particles have an average particle diameter within the previously-described ranges, cycle characteristics of the all-solid secondary battery may further be improved.

### Solid Electrolyte Layer: Binder

For example, the solid electrolyte layer 30 may further include a binder. The binder included in the solid electrolyte layer 30 may be, for example, styrene butadiene rubber (SBR), polytetrafluoroethylene, polyvinylidene fluoride, or polyethylene, but is not limited thereto, and any binders available in the art may also be utilized. The binder of the solid electrolyte layer 30 may be selected from binders included in the positive active material layer 12. In some embodiments, the binder may not need to be provided (e.g., may be excluded).

The binder included in the solid electrolyte layer may include, for example, a conductive binder and/or a non-conductive binder. The conductive binder may be, for example, an ion-conductive binder and/or an electron-conductive binder. A binder having both (e.g., simultaneously) ionic conductivity and electronic conductivity may both (e.g., simultaneously) belong to the ion-conductive binder and the electron-conductive binder. For the conductive binder, any conductive binder available in the art may be utilized.

The binder included in the solid electrolyte layer 30 may include, for example, a first binder. The first binder may be, for example, a dry binder. The dry binder may be, for example, a binder not impregnated, dissolved, or dispersed in a solvent. The dry binder may be, for example, a binder not including a solvent or not in contact with a solvent.

The first binder may be, for example, a fibrillized binder. The fibrillized binder may act as a matrix in the form of fibers binding a plurality of sulfide-based solid electrolyte particles and inorganic particles included in the solid electrolyte layer while supporting the same. It may be confirmed that the fibrillized binder has a fibrous form based on an SEM image of a cross-section thereof. The fibrillized binder may have an aspect ratio of, for example, about 10 or more, about 20 or more, about 50 or more, or about 100 or more. The first binder may be, for example, polytetrafluoroethylene (PTFE) or a polyvinylidene fluoride-hexafluoropropylene (PVDF-HFP) copolymer, but is not limited thereto, and any fibrillized binders utilized to prepare a dry composition may also be utilized. For example, the first binder may include a fluorine-based binder. The fluorine-based binder may be, for example, polytetrafluoroethylene (PTFE). The aspect ratio of the fibrilized binder, e.g., a ratio of diameter and length of the fibrilized binder may be determined from SEM images.

The binder included in the solid electrolyte layer 30 may include, for example, a second binder. The second binder may be, for example, a dry binder. Descriptions of the dry binder are as described above in the first binder.

The second binder may be, for example, a non-fibrillized binder. The non-fibrillized binder may serve as a site for binding of the sulfide-based solid electrolyte particles and inorganic particles included in the solid electrolyte layer while supporting the same. It may be confirmed that the non-fibrillized binder is in the form of particles, rather than in the form of fibers, based on a cross-sectional image of the electrode obtained by utilizing a scanning electron microscope. The non-fibrillized binder may have, for example, an aspect ratio of about 5 or less, about 3 or less, or about 2 or less. Examples of the second binder may include polyvinylidene fluoride (PVDF), polyvinyl alcohol, polyacrylonitrile, carboxymethylcellulose (CMC), starch, hydroxypropylcellulose, cellulose, polyvinylpyrrolidone, polyethylene, polypropylene, ethylene-propylene-diene polymer (EPDM), sulfonated-EPDM, styrene butadiene rubber (SBR), fluororubber, or a copolymer thereof, but are not limited thereto, and any binders utilized in the manufacture of dry electrodes may also be utilized. For example, the second binder may include a fluorine-based binder. The fluorine-based binder may be, for example, polyvinylidene fluoride (PVDF).

An amount of the binder included in the solid electrolyte layer 30 may be, for example, from about 1 wt% to about 10 wt%, from about 1 wt% to about 5 wt%, or from about 1 wt% to about 3 wt% based on a total weight of the solid electrolyte layer. If (e.g., when) the amount of the binder included in the solid electrolyte layer is within the ranges described above, binding strength of the solid electrolyte layer may be improved and the all-solid secondary battery may have an energy density maintained at a high level.

The solid electrolyte layer 30 may be, for example, a self-standing film. For example, the solid electrolyte layer may have a film shape without utilizing a support. Therefore, the solid electrolyte layer may be prepared as a separate self-standing film and then disposed between the positive electrode layer and the negative electrode layer. The solid electrolyte layer may be, for example, free from a residual processing solvent. For example, the solid electrolyte layer does not include a processing solvent intentionally added thereto because the solid electrolyte layer is prepared by a dry method. For example, the solid electrolyte layer does not include a residual processing solvent. A trace amount of unintended solvent may remain in the solid electrolyte layer, but the solvent may not be an intentionally added processing solvent. Therefore, the solid electrolyte layer may be distinguished from a wet solid electrolyte layer prepared by mixing sulfide-based solid electrolyte particles with a processing solvent, and drying the mixture to remove the processing solvent in part or in whole.

### Positive Electrode Layer

### Positive Electrode Layer: Positive Active Material

Referring to FIGS. 1 to 5, the positive active material layer 12 may include, for example, a positive active material and a solid electrolyte. The solid electrolyte included in the positive active material layer 12 may be selected from the solid electrolytes included in the solid electrolyte layer 30. For detailed descriptions of the solid electrolyte, refer to descriptions of the solid electrolyte layer 30. The solid electrolyte may not need to be provided (e.g., may be excluded).

The positive active material included in the positive active material layer 12 may be a positive active material capable of reversibly absorbing and desorbing lithium ions. The positive active material may include, for example, an oxide-based positive active material, a sulfide-based positive active material, or any combination thereof.

The oxide-based positive active material may include, for example, a lithium transition metal oxide, a metal oxide, or any combination thereof. The lithium transition metal oxide may include, for example, a lithium cobalt oxide, a lithium nickel oxide, a lithium nickel cobalt oxide, a lithium nickel cobalt aluminum oxide, a lithium nickel cobalt manganese oxide, a lithium manganate, a lithium iron phosphate, or any combination thereof. The lithium oxide may include, for example, an iron oxide, a vanadium oxide, or any combination thereof.

The sulfide-based positive active material may include, for example, nickel sulfide, copper sulfide, Li₂S, a Li₂S-containing composite, or any combination thereof.

The oxide-based positive active material may include, for example, at least one composite oxide of lithium and a metal selected from among cobalt, manganese, nickel, and a combination thereof. The oxide-based positive active material may include, for example, a compound represented by one of the following formulae: LiₐA_{1-b}B'_{b}D₂ (wherein 0.90≤a≤1 and 0≤b≤0.5); LiₐE_{1-b}B'_{b}O_{2-c}D_{c} (wherein 0.90≤a≤1, 0≤b≤0.5, and 0≤c≤0.05); LiE_{2-b}B'_{b}O_{4-c}D_{c} (wherein 0≤b≤0.5 and 0≤c≤0.05); LiₐNi_{1-b-c}Co_{b}B'_{c}D_{α} (wherein 0.90≤a≤1, 0≤b≤0.5, 0≤c≤0.05, and 0<α≤2); LiₐNi_{1-b-c}Co_{b}B'_{c}O_{2-α}F'_{α} (wherein 0.90≤a≤1, 0≤b≤0.5, 0≤c≤0.05, and 0<α<2); LiₐNi_{1-b-c}Co_{b}B'_{c}O₂ (wherein 0.90≤a≤1, 0≤b≤0.5, and 0≤c≤0.05); LiₐNi_{1-b-c}Mn_{b}B'_{c}D_{α} (wherein 0.90≤a≤1, 0≤b≤0.5, 0≤c≤0.05, and 0<α≤2); LiₐNi_{1-b-c}Mn_{b}B'_{c}O₂₋ₐF'_{α} (wherein 0.90≤a≤1, 0≤b≤0.5, 0≤c≤0.05, and 0<α<2); LiₐNi_{1-b-c}Mn_{b}B'_{c}O₂ (wherein 0.90≤a≤1, 0≤b≤0.5, and 0≤c≤0.05); LiₐNi_{b}E_{c}G_{d}O₂ (wherein 0.90≤a≤1, 0≤b≤0.9, 0≤c≤0.5, and 0.001≤d≤0.1); LiₐNi_{b}Co_{c}Mn_{d}GₑO₂ (wherein 0.90≤a≤1, 0≤b≤0.9, 0≤c≤0.5, 0≤d ≤0.5 and 0.001≤e≤0.1); LiₐNiG_{b}O₂ (wherein 0.90≤a≤1 and 0.001≤b≤0.1); LiₐCoG_{b}O₂ (wherein 0.90≤a≤1 and 0.001≤b≤0.1); LiₐMnG_{b}O₂ (wherein 0.90≤a≤1 and 0.001≤b≤0.1); LiₐMn₂G_{b}O₄ (wherein 0.90≤a≤1 and 0.001≤b≤0.1); LiV₂O₅; LiI'O₂; LiNiVO₄; Li_{(3-f)}J₂(PO₄)₃ (wherein 0≤f≤2); Li_{(3-f)}Fe₂(PO₄)₃ (wherein 0≤f≤2); and LiFePO₄.

In the formulae representing compounds above, A may be Ni, Co, Mn, or any combination thereof; B' may be Al, Ni, Co, Mn, Cr, Fe, Mg, Sr, V, a rare earth element, or any combination thereof; D may be O, F, S, P, or any combination thereof; E may be Co, Mn, or any combination thereof; F' may be F, S, P, or any combination thereof; G may be Al, Cr, Mn, Fe, Mg, La, Ce, Sr, V, or any combination thereof; Q may be Ti, Mo, Mn, or any combination thereof; I' may be Cr, V, Fe, Sc, Y, or any combination thereof; and J may be V, Cr, Mn, Co, Ni, Cu, or any combination thereof. The previously-described compound having a coating layer on the surface thereof may also be utilized or a mixture of the previously-described compound and a compound having a coating layer may also be utilized. The coating layer added to the surface of the compound may include, for example, a compound of a coating element such as an oxide, hydroxide, oxyhydroxide, oxycarbonate, or hydroxycarbonate of the coating element. The compound constituting the coating layer may be amorphous or crystalline. The coating element included in the coating layer may be Mg, Al, Co, K, Na, Ca, Si, Ti, V, Sn, Ge, Ga, B, As, Zr, or any mixture thereof. A method of forming the coating layer may be selected from those not adversely affecting physical properties of the positive active material. The coating methods may be, for example, spray coating and dip coating. These methods may be obvious to those of ordinary skill in the art, and thus detailed descriptions thereof will not be given.

The oxide-based positive active material may include, for example, a lithium transition metal oxide represented by one of Formulae 1 to 8.

**Formula 1** **LiₐNiₓCo_{y}M_{z}O_{2-b}A_{b}**

In Formula 1,
1.0≤a≤1.2, 0≤b≤0.2, 0.8≤x<1, 0≤y≤0.3, 0<z≤0.3, and x+y+z=1,
M may be manganese (Mn), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminum (Al), boron (B), or a combination thereof, and
A may be F, S, Cl, Br, or a combination thereof.

**Formula 2** **LiNiₓCo_{y}Mn_{z}O₂**

**Formula 3** **LiNiₓCo_{y}Al_{z}O₂**

In Formulae 2 and 3, 0.8≤x≤0.95, 0≤y≤0.2, 0<z≤0.2, and x+y+z=1.

**Formula 4** **LiNiₓCo_{y}Mn_{z}Al_{w}O₂**

In Formula 4, 0.8≤x≤0.95, 0≤y≤0.2, 0<z≤0.2, 0<w≤0.2, and x+y+z+w=1.

**Formula 5** **LiₐCoₓM_{y}O_{2-b}A_{b}**

In Formula 5,
1.0≤a≤1.2, 0≤b≤0.2, 0.9≤x≤1, 0≤y≤0.1, and x+y=1,
M may be manganese (Mn), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminum (Al), boron (B), or a combination thereof, and
A may be F, S, Cl, Br, or a combination thereof.

**Formula 6** **LiₐNiₓMn_{y}M'_{z}O_{2-b}A_{b}**

In Formula 6,
1.0≤a≤1.2, 0≤b≤0.2, 0<x≤0.3, 0.5≤y<1, 0<z≤0.3, and x+y+z=1,
M' may be cobalt (Co), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminum (Al), boron (B), or a combination thereof, and
A may be F, S, Cl, Br, or a combination thereof.

**Formula 7** **LiₐM1ₓM2_{y}PO_{4-b}X_{b}**

In Formula 7, 0.90≤a≤1.1, 0≤x≤0.9, 0≤y≤0.5, 0.9<x+y<1.1, and 0≤b≤2 ,
M1 may be chromium (Cr), manganese (Mn), iron (Fe), cobalt (Co), nickel (Ni), copper (Cu), zirconium (Zr), or a combination thereof, and
M2 may be magnesium (Mg), calcium (Ca), strontium (Sr), barium (Ba), titanium (Ti), zinc (Zn), boron (B), niobium (Nb), gallium (Ga), indium (In), molybdenum (Mo), tungsten (W), aluminum (Al), silicon (Si), chromium (Cr), vanadium (V), scandium (Sc), yttrium (Y), or a combination thereof, and X may be O, F, S, P or a combination thereof.

**Formula 8** **LiₐM3_{z}PO₄**

In Formula 8, 0.90≤a≤1.1 and 0.9≤z≤1.1, and
M3 may be chromium (Cr), manganese (Mn), iron (Fe), cobalt (Co), nickel (Ni), copper (Cu), zirconium (Zr), or a combination thereof.

The oxide-based positive active material may be covered with a coating layer. The coating layer may be formed of any material commonly utilized for coating layers of positive active materials of all-solid secondary batteries. The coating layer may be formed of, for example, Li₂O-ZrO₂ (LZO).

The sulfide-based positive active material may include, for example, a Li₂S-containing composite. The Li₂S-containing composite may include, for example, a composite of Li₂S and carbon, a composite of Li₂S, carbon, and a solid electrolyte, a composite of Li₂S and a solid electrolyte, a composite of Li₂S and a metal carbide, a composite of Li₂S, carbon, and a metal carbide, a composite of Li₂S and a metal nitride, a composite of Li₂S, carbon, and a metal nitride, a composite of Li₂S and a metal, a composite of Li₂S, a metal, and carbon, or any combination thereof.

The composite of Li₂S and carbon may include carbon. The carbon may be, for example, any material including carbon atoms and commonly available as conductive materials in the art. The carbon may be, for example, crystalline carbon, amorphous carbon, or any combination thereof. The carbon may be, for example, a calcined product of a carbon precursor. The carbon may be, for example, a carbon nanostructure. The carbon nanostructure may be, for example, a one-dimensional carbon nanostructure, a two-dimensional carbon nanostructure, a three-dimensional carbon nanostructure, or any combination thereof. The carbon nanostructure may be, for example, carbon nanotube, carbon nanofiber, carbon nanobelt, carbon nanorod, graphene, graphene oxide (GO), reduced graphene oxide (rGO), graphene ball (GB), or any combination thereof. The carbon may be, for example, porous carbon or nonporous carbon. The porous carbon may have, for example, periodic and regular two-dimensional or three-dimensional pores. The porous carbon may be, for example, carbon black such as Ketjen black, acetylene black, Denka black, thermal black, and channel black; graphite, activated carbon, or any combination thereof. The carbon may be, for example, in a particle form, a sheet form, or a flake form, but is not limited thereto, any material commonly available in the art as carbon may also be utilized. A method of manufacturing the composite of Li₂S and carbon may be a dry method, a wet method, any combination thereof, but is not limited thereto, and any methods commonly available in the art to manufacture the composite of Li₂S and carbon, such as milling, heat treatment, and deposition may also be utilized without limitation.

The composite of Li₂S, carbon, and a solid electrolyte may include carbon and a solid electrolyte. For descriptions of carbon, refer to the previously-described composite of Li₂S and carbon. The solid electrolyte may be any solid electrolytes commonly available in the art as an ion-conductive material. The solid electrolyte may be, for example, an inorganic solid electrolyte. The solid electrolyte may be, for example, a crystalline solid electrolyte, an amorphous solid electrolyte, or any combination thereof. The solid electrolyte may be, for example, a sulfide-based solid electrolyte, an oxide-based solid electrolyte, a lithium salt compound, or any combination thereof. The sulfide-based solid electrolyte may include, for example, Li, S and P, and may further include a halogen element. The sulfide-based solid electrolyte may be selected from sulfide-based solid electrolytes utilized in the solid electrolyte layer. The sulfide-based solid electrolyte may have an ionic conductivity of, for example, 1×10⁻⁵ S/cm or more at room temperature. The sulfide-based solid electrolyte may include, for example, at least one selected from among Li₃PO₄-Li₂SO₄, Li₂S-P₂S₅, Li₂S-P₂S₅-LiX (wherein X is a halogen atom) Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ (wherein m and n are positive numbers, and Z is Ge, Zn, or Ga), Li₂S-GeS₂, Li₂S-SiS₂-Li₃PO₄, Li₂S-SiS₂-LiₚMO_{q} (wherein p and q are positive numbers and M is P, Si, Ge, B, Al, Ga, or In), Li₇₋ₓPS₆₋ₓClₓ (wherein 0≤x≤2), Li₇₋ₓPS₆₋ₓBrₓ (wherein 0≤x≤2), and Li₇₋ₓPS₆₋ₓIₓ (wherein 0≤x≤2). The oxide-based solid electrolyte may include, for example, Li, O, and a transition metal element, and may optionally further include another element. The oxide-based solid electrolyte may be, for example, a solid electrolyte having an ionic conductivity of 1×10⁻⁵ S/cm or more at room temperature. The oxide-based solid electrolyte may be selected from oxide-based solid electrolytes utilized in the solid electrolyte layer. The lithium salt compound may be, for example, an inorganic compound. The solid electrolyte may include, for example, a lithium salt compound, and the lithium salt compound does not include a sulfur (S) atom. The lithium salt compound may be, for example, a binary compound consisting of lithium and one element selected from Groups 13 to 17 of the periodic table. The binary compound may include, for example, at least one selected from among LiF, LiCl, LiBr, Lil, LiH, Li₂S, Li₂O, Li₂Se, Li₂Te, Li₃N, Li₃P, Li₃As, Li₃Sb, Li₃, and LiB₃. The lithium salt compound may be, for example, a ternary compound consisting of lithium and two elements selected from Groups 13 to 17 of the periodic table. The ternary compound may include, for example, at least one selected from among Li₃OCl, LiPF₆, LiBF₄, LiSbF₆, LiAsF₆, LiClO₄, LiAlO₂, LiAlCl₄, LiNO₃, Li₂CO₃, LiBH₄, Li₂SO₄, Li₃BO₃, Li₃PO₄, Li₄NCl, Li₅NCl₂, and Li₃BN₂. The lithium salt compound may be, for example, at least one lithium halide compound selected from among LiF, LiCl, LiBr, and Lil. The solid electrolyte may be, for example, a mixture of a sulfide-based solid electrolyte and a lithium salt. For example, the solid electrolyte may include a mixture of Li₃PO₄-Li₂SO₄ and a binary lithium salt compound or a mixture of Li₃PO₄-Li₂SO₄ and a ternary lithium salt compound.

The composite of Li₂S and a solid electrolyte may include a solid electrolyte. For descriptions of the solid electrolyte, refer to the previously-described solid electrolyte utilized in the composite of Li₂S, carbon, and the solid electrolyte. The composite of Li₂S and the solid electrolyte may include, for example, at least one composite of a lithium salt selected from among LiF, LiCl, LiBr, Lil, LiH, Li₂S, Li₂O, Li₂Se, Li₂Te, Li₃N, Li₃P, Li₃As, Li₃Sb, Li₃, and LiB₃.

The composite of Li₂S and a metal carbide may include a metal carbide. The metal carbide may be, for example, a two-dimensional metal carbide. The two-dimensional metal carbide may be, for example, MXene. The two-dimensional metal carbide may be represented by, for example, Mₙ₊₁CₙTₓ (wherein M is a transition metal, T is a terminal group, T is O, OH, and/or F, n=1, 2, or 3, and x is a number of terminal groups). The two-dimensional metal carbide may be, for example, Ti₂CTₓ, (Ti_{0.5}, Nb_{0.5})₂CTₓ, Nb₂CTₓ, V₂CTₓ, Ti₃C₂Tₓ, (V_{0.5}, Cr_{0.5})₃C₂Tₓ, Ti₃CNTₓ, Ta₄C₃Tₓ, Nb₄C₃Tₓ, or any combination thereof. The surface of the two-dimensional metal carbide may be terminated with O, OH, and/or F.

The composite of Li₂S, carbon, and a metal carbide may include carbon and a metal carbide. For descriptions of carbon, refer to the previously-described composite of Li₂S and carbon. For descriptions of the metal carbide, refer to the previously-described composite of Li₂S and a metal carbide.

The composite of Li₂S and a metal nitride may include a metal nitride. The metal nitride may be, for example, a two-dimensional metal nitride. The two-dimensional metal nitride may be represented by, for example, Mₙ₊₁NₙTₓ (wherein M is a transition metal, T is a terminal group, T is O, OH, and/or F, n=1, 2, or 3, and x is a number of terminal groups). The surface of the two-dimensional metal nitride may be terminated with O, OH, and/or F.

The composite of Li₂S, carbon, and a metal nitride may include carbon and a metal nitride. For descriptions of carbon, refer to the previously-described composite of Li₂S and carbon. For descriptions of the metal nitride, refer to the previously-described composite of Li₂S and a metal nitride.

The positive active material may have a particle shape, for example, a spherical shape or an elliptically spherical shape. A particle diameter of the positive active material is not limited and may be within a range applicable to the positive active material of all-solid secondary batteries. Also, an amount of the positive active material of the positive electrode layer 10 is not limited and may be within a range applicable to positive electrodes of all-solid secondary batteries. An amount of the positive active material included in the positive active material layer 12 may be, for example, from about 10 wt% to about 99 wt%, from about 10 wt% to about 90 wt%, from about 10 wt% to about 80 wt%, from about 10 wt% to about 70 wt%, or from about 10 wt% to about 50 wt% based on a total weight of the positive active material layer 12.

### Positive Electrode Layer: Solid Electrolyte

The positive active material layer 12 may further include, for example, a solid electrolyte. The positive active material layer 12 may include an oxide-based solid electrolyte or a sulfide-based solid electrolyte.

The solid electrolyte included in the positive active material layer 12 may be a sulfide-based solid electrolyte. For detailed descriptions of the sulfide-based solid electrolyte, refer to descriptions of the solid electrolyte layer 30.

The solid electrolyte included in the positive active material layer 12 may be an oxide-based solid electrolyte. The oxide-based solid electrolyte may include, for example, at least one selected from among Li_{1+x+y}AlₓTi₂₋ₓSi_{y}P_{3-y}O₁₂ (wherein 0<x<2 and 0≤y<3), BaTiO₃, Pb(Zr,Ti)O₃ (PZT), Pb₁₋ₓLaₓZr_{1-y}Ti_{y}O₃ (PLZT, where 0≤x<1 and 0≤y<1), PB(Mg₃Nb_{2/3})O₃-PbTiO₃(PMN-PT), HfO₂, SrTiO₃, SnO₂, CeO₂, Na₂O, MgO, NiO, CaO, BaO, ZnO, ZrO₂, Y₂O₃, Al₂O₃, TiO₂, SiO₂, Li₃PO₄, LiₓTi_{y}(PO₄)₃ (wherein 0<x<2 and 0<y<3), LiₓAl_{y}Ti_{z}(PO₄)₃ (wherein 0<x<2, 0<y<1, and 0<z<3), Li_{1+x+y}(Al, Ga)ₓ(Ti, Ge)₂₋ₓSi_{y}P_{3-y}O₁₂ (wherein 0≤x≤1 and 0≤y≤1), LiₓLa_{y}TiO₃ (wherein 0<x<2 and 0<y<3), Li₂O, LiOH, Li₂CO₃, LiAlO₂, Li₂O-Al₂O₃-SiO₂-P₂O₅-TiO₂-GeO₂, and Li₃₊ₓLa₃M₂O₁₂ (wherein M = Te, Nb, or Zr, and x is an integer from 1 to 10). The solid electrolyte may be manufactured by a sintering method, and/or the like. For example, the oxide-based solid electrolyte may be a garnet-type or kind solid electrolyte selected from among Li₇La₃Zr₂O₁₂ (LLZO) and Li₃₊ₓLa₃Zr₂₋ₐMₐO₁₂ (M doped LLZO, wherein M=Ga, W, Nb, Ta, or Al and x is an integer from 1 to 10, 0≤a<2).

The solid electrolyte included in the positive active material layer 12 may have a smaller average particle diameter than that of a solid electrolyte included in the solid electrolyte layer 30. For example, the average particle diameter of the solid electrolyte included in the positive active material layer 12 may be 90% or less, 80% or less, 70% or less, 60% or less, 50% or less, 40% or less, 30% or less, or 20% or less of the average particle diameter of the solid electrolyte included in the solid electrolyte layer 30. The particle diameter of the solid electrolyte may be, for example, a median particle diameter (D50). The median particle diameter D50 may be a particle diameter corresponding to a 50% cumulative volume calculated from the smallest particle in a particle size distribution measured, for example, by laser diffraction method.

### Positive Electrode Layer: Binder

The positive active material layer 12 may include a binder. The binder may be styrene butadiene rubber (SBR), polytetrafluoroethylene, polyvinylidene fluoride, or polyethylene, but is not limited thereto and any binders commonly available in the art may also be utilized.

### Positive Electrode Layer: Conductive Material

The positive active material layer 12 may include a conductive material. The conductive material may be, for example, graphite, carbon black, acetylene black, Ketjen black, carbon fiber, or metal powder, but is not limited thereto, and any conductive materials commonly available in the art may also be utilized.

### Positive Electrode Layer: Other Additives

The positive active material layer 12 may further include, for example, a filler, a coating agent, a dispersant, and an ion-conductive adjuvant in addition to the positive active material, the solid electrolyte, the binder, and the conductive material described previously.

The filler, the coating agent, the dispersant, and the ion-conductive adjuvant included in the positive active material layer 12 may be any suitable materials commonly utilized in electrodes of all-solid secondary batteries.

### Positive Electrode Layer: Positive Current Collector

The positive current collector 11 may be, for example, in the form of a plate or foil formed of indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof. The positive current collector 11 may not need to be provided (e.g., may be excluded). The positive current collector 11 may have a thickness of, for example, about 1 µm to about 100 µm, about 1 µm to about 50 µm, about 5 µm to about 25 µm, or about 10 µm to about 20 µm.

The positive current collector 11 may include, for example, a base film and a metal layer disposed on at least one side (e.g., one or both (e.g., opposite) sides) of the base film. The base film may include, for example, a polymer. The polymer may include, for example, polyethyleneterephthalate (PET), polyethylene (PE), polypropylene (PP), polybutyleneterephthalate (PBT), polyimide (PI), or any combination thereof. The metal layer may include, for example, indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof. If (e.g., when) the positive current collector 11 has the previously-described structure, the weight of the positive electrode may be reduced, so that energy density of the all-solid secondary battery may be increased.

### Positive Electrode Layer: Inactive Member

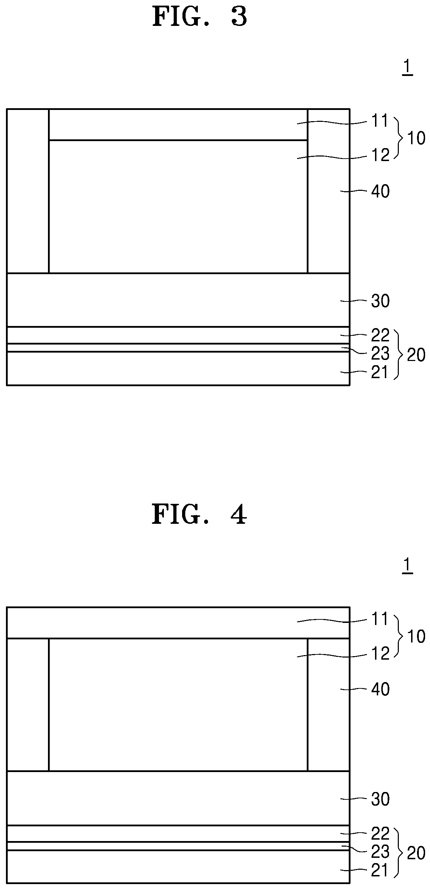

Referring to FIGS. 3 to 5, the positive electrode layer 10 may include a positive current collector 11, and a positive active material layer 12 disposed on one side of the positive current collector 11, and may further include an inactive member 40 (40a and 40b) disposed on one side surface of the positive electrode layer 10.

By including the inactive member 40, cracks of the solid electrolyte layer 30 may be prevented or reduced during a manufacturing process and/or a charging and discharge process of the all-solid secondary battery 1, resulting in improving cycle characteristics of the all-solid secondary battery 1. In an all-solid secondary battery 1 not including the inactive member 40, a pressure may non-uniformly be applied to the solid electrolyte layer 30 in contact with the positive electrode layer 10 to cause occurrence of cracks in the solid electrolyte layer 30 during manufacturing and/or charging and discharging of the all-solid secondary battery 1, and lithium metal may grow thereby increasing the possibility of a short circuit.

The inactive member 40 may be arranged to surround the positive electrode layer along side surfaces of the positive electrode layer 10. The inactive member 40 may be, for example, in contact with the solid electrolyte layer 30 in a state of around (e.g., surrounding) a part of or the entire side surfaces the positive electrode layer 10. Cracks, which are caused by a pressure difference in the solid electrolyte layer 30 not in contact with the positive electrode layer 10 during a pressing process, may be effectively inhibited because the inactive member 40 is in contact with the solid electrolyte layer 30 in a state of around (e.g., surrounding) side surfaces of the positive electrode layer 10. The inactive member 40 around (e.g., surrounding) the side surfaces of the positive electrode layer 10 is separated from the negative electrode layer 20, for example, from the first negative active material layer 22. The inactive member 40 may be in contact with the solid electrolyte layer 30 in a state of around (e.g., surrounding) side surfaces of the positive electrode layer 10 and may be separated from the negative electrode layer 20. Therefore, the possibility of a short circuit caused by physical contact between the positive electrode layer 10 and the first negative active material layer 22 or the possibility of a short circuit caused by overcharging of lithium may be inhibited. Referring to FIG. 3, if (e.g., when) the inactive member 40 is disposed on one side surface of the positive active material layer 12 as well as one side surface of the positive current collector 11, the possibility of a short circuit caused by contact between the positive current collector 11 and the negative electrode layer 20 may be inhibited more effectively. In some embodiments, referring to FIG. 4, the inactive member 40 may be disposed on one side surface of the positive active material layer 12 and between the solid electrolyte layer 30 and the positive current collector 11 facing the solid electrolyte layer 30. The inactive member 40 may not be disposed on the side surface of the positive current collector 11. By disposing the inactive member 40 between the positive current collector 11 and the solid electrolyte layer 30, a short circuit caused by the contact between the positive current collector 11 and the negative electrode layer 20 may effectively be prevented or reduced.

In some embodiments, a part of or the entire inactive member 40 (40a and 40b) may be arranged to be spaced apart from side surfaces of the positive electrode layer 10. If (e.g., when) a part of or the entire inactive member 40 (40a and 40b) is arranged to be spaced apart from side surfaces of the positive electrode layer 10, the manufacturing process of the all-solid secondary battery 1 may be performed more easily, and a manufacturing rate of the all-solid secondary battery 1 may be increased. If (e.g., when) a part of or the entire inactive member 40 (40a and 40b) is arranged to be spaced apart from side surfaces of the positive electrode layer 10, a volume change of the positive electrode layer 10 in a lateral direction may be accommodated more easily during charging and discharging, and thus lifespan characteristics of the all-solid secondary battery 1 may further be improved. Distances between the inactive member 40 (40a and 40b) and the side surfaces of the positive electrode layer 10 may be, each independently, for example, from about 0.1 µm to about 10 mm, from about 1 µm to about 1 mm, from about 1 µm to about 500 µm, from about 1 µm to about 100 µm, from about 1 µm to about 50 µm, or from about 1 µm to about 10 µm.

The inactive member 40 may further include a position determiner configured to determine a position of the inactive member 40 on the solid electrolyte layer 30. If (e.g., when) the inactive member 40 includes the position determiner, the position where the inactive member 40 is located on the solid electrolyte layer 30 may be determined more easily. As a result, a manufacturing rate of the all-solid secondary battery 1 may be increased and ease of manufacture thereof may be improved.

Referring to FIGS. 3 and 4, the inactive member 40 may extend from one side surface of the positive electrode layer 10 to an end portion of the solid electrolyte layer 30. By extending the inactive member 40 to the end portion of the solid electrolyte layer 30, cracks occurring in the end portion of the solid electrolyte layer 30 may be inhibited. The end portion of the solid electrolyte layer 30 may be the outermost portion in contact with a side surface of the solid electrolyte layer 30. The inactive member 40 may extend to the outermost portion in contact with the side surface of the solid electrolyte layer 30. The inactive member 40 may be separated from the negative electrode layer 20, for example, from the first negative active material layer 22. The inactive member 40 may extend to the end portion of the solid electrolyte layer 30 but not in contact with the negative electrode layer 20. The inactive member 40 may fill a space between one side surface of the positive electrode layer 10 and the end portion of the solid electrolyte layer 30.

The inactive member 40 may be, for example, a gasket. By utilizing the gasket as the inactive member 40, cracks caused in the solid electrolyte layer 30 by a pressure difference during a pressing process may be inhibited more effectively.

The inactive member 40 may have, for example, a single-layer structure. In other embodiments, although not shown in the drawings, the inactive member 40 may have a multilayer structure. In the inactive member 40 having a multilayer structure, each layer may have a different composition. The inactive member 40 having a multilayer structure may have a two-layer structure, a three-layer structure, a four-layer structure, or a five-layer structure. The inactive member 40 having a multilayer structure may include, for example, at least one adhesive layer and at least one support layer. The adhesive layer may effectively prevent or reduce separation of the positive electrode layer 10 from the solid electrolyte layer 30 caused by a volume change of the positive electrode layer 10 during a charging and discharging process of the all-solid secondary battery 1 and may provide binding strength between the support layer and other layers to increase strength of a film of the inactive member 40. The support layer may provide a supporting force to the inactive member 40 to prevent or reduce substantially non-uniform application of a pressure to the solid electrolyte layer 30 during a pressing process or a charging and discharging process and prevent or reduce deformation of the all-solid secondary battery 1.

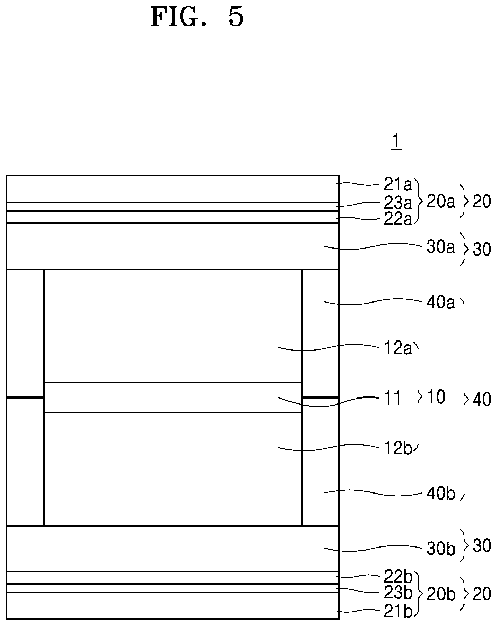

Referring to FIG. 5, the all-solid secondary battery 1 may include a positive electrode layer 10, a negative electrode layer 20, and a solid electrolyte layer 30 (30a and 30b) disposed therebetween. The positive electrode layer 10 may include a positive current collector 11 and a first positive active material layer 12a and a second positive active material layer 12b respectively disposed on both (e.g., on first (upper) and second (lower) or opposite sides) of the positive current collector 11, the solid electrolyte layer 30 may include a first solid electrolyte layer 30a in contact with the first positive active material layer 12a and a second solid electrolyte layer 30b in contact with the second positive active material layer 12b, the negative electrode layer 20 may include a first negative electrode layer 20a in contact with the first solid electrolyte layer 30a and a second negative electrode layer 20b in contact with the second solid electrolyte layer 30b, and the inactive member 40 may be located to surround side surfaces of the positive electrode layer 10 between the first solid electrolyte layer 30a and the second solid electrolyte layer 30b facing each other. The inactive member 40 may include, for example, a first inactive member 40a in contact with the first solid electrolyte layer 30a and a second inactive member 40b in contact with the second solid electrolyte layer 30b. Therefore, the all-solid secondary battery 1 may have a bi-cell structure. If (e.g., when) the all-solid secondary battery 1 has such a bi-cell structure, the solid electrolyte layers 30 and the negative electrode layers 20 are symmetrically arranged to face each other about the positive electrode layer 10, structural deformation caused by a pressure applied during manufacturing of the all-solid secondary battery 1 may be inhibited more effectively. Therefore, cracks may be inhibited in the solid electrolyte layer 30 during a manufacturing process and/or a charging and discharging process of the all-solid secondary battery 1 and a short circuit of the all-solid secondary battery 1 may be prevented or reduced, thereby further improving cycle characteristics of the all-solid secondary battery 1. For example, by utilizing one positive current collector 11 for a plurality of positive active material layers 12a and 12b, energy density of the all-solid secondary battery 1 may be increased.

Referring to FIGS. 3 to 5, the inactive member 40 may be, for example, a flame-retardant inactive member. Thermal runaway and ignition of the all-solid secondary battery 1 may be prevented or reduced, because the flame-retardant inactive member provides flame retardancy. As a result, safety of the all-solid secondary battery 1 may further be improved. The flame-retardant inactive member may absorb moisture remaining in the all-solid secondary battery 1, and thus deterioration of the all-solid secondary battery 1 may be prevented or reduced so as to improve lifespan characteristics of the all-solid secondary battery 1.

The flame-retardant inactive member may include, for example, a matrix and a filler. The matrix may include, for example, a substrate and a reinforcement. The matrix may include, for example, a fibrous substrate and a fibrous reinforcement. By including the substrate, the matrix may have elasticity. Therefore, the matrix may effectively accommodate a volume change during charging and discharging of the all-solid secondary battery 1 and may be arranged in one or more suitable positions. The substrate included in the matrix may include, for example, a first fibrous material. If (e.g., when) the substrate includes the first fibrous material, a volume change of the positive electrode layer 10 is effectively accepted during charging and discharging of the all-solid secondary battery 1, and deformation of the inactive member 40 caused by the volume change of the positive electrode layer 10 may effectively be inhibited. The first fibrous material may be, for example, a material having an aspect ratio of about 5 or more, about 20 or more, or about 50 or more. The first fibrous material may be, for example, a material having an aspect ratio of about 5 to about 1000, about 20 to about 1000, or about 50 to about 1000. The first fibrous material may be, for example, an insulating material. If (e.g., when) the first fibrous material is an insulating material, a short circuit occurring between the positive electrode layer 10 and the negative electrode layer 20 caused by lithium dendrite and/or the like formed during a charging and discharging process of the all-solid secondary battery 1 may effectively be inhibited. The first fibrous material may include, for example, at least one selected from pulp fibers, insulating polymer fibers, and ion-conductive polymer fibers. Strength of the matrix may be increased, because the matrix includes the reinforcement. Therefore, the matrix may prevent or reduce an excessive volume change during charging and discharging of the all-solid secondary battery 1 and prevent or reduce deformation of the all-solid secondary battery. The reinforcement included in the matrix may include, for example, a second fibrous material. Strength of the matrix may be increased more uniformly, because the reinforcement includes the second fibrous material. The second fibrous material may be, for example, a material having an aspect ratio of about 3 or more, about 5 or more, or about 10 or more. The second fibrous material may be, for example, a material having an aspect ratio of about 3 to about 100, about 5 to about 100, or about 10 to about 100. The second fibrous material may be, for example, a flame-retardant material. Ignition caused by thermal runaway during a charging and discharging process of the all-solid secondary battery 1 or due to an external impact may be effectively prevented or reduced, because the second fibrous material is the flame-retardant material. The second fibrous material may be, for example, glass fibers, metal oxide fibers, and ceramic fibers.

The flame-retardant inactive member may include a filler in addition to the matrix. The filler may be located inside the matrix, on the surface of the matrix, or both (e.g., simultaneously) inside and on the surface of the matrix. The filler may be, for example, an inorganic material. The filler included in the flame-retardant inactive member may be, for example, a moisture getter, a flame retardant, or a lithium immobilizer. The moisture getter may absorb moisture, for example, at a temperature below 100°C to remove moisture remaining in the all-solid secondary battery 1, thereby preventing or reducing deterioration of the all-solid secondary battery 1. If (e.g., when) a temperature of the all-solid secondary battery 1 exceeds 150°C by a thermal runaway caused during a charging and discharging process of the all-solid secondary battery 1 or due to an external impact, the moisture getter may release the absorbed moisture, thereby effectively inhibiting ignition of the all-solid secondary battery 1. The moisture getter may be, for example, a metal hydroxide having moisture absorbency. The metal hydroxide included in the filler may be, for example, Mg(OH)₂, Fe(OH)₃, Sb(OH)₃, Sn(OH)₄, Tl(OH)₃, Zr(OH)₄, Al(OH)₃, or any combination thereof. The flame retardant may include, for example, at least one selected from among zinc borate, a calcium molybdate zinc complex, MoOs, (NH₄)₂Mo₂O₇, Sb₂O₃, and Sb₃O₅. The lithium immobilizer may be, for example, a compound immobilizing lithium by reacting with liquid lithium at a temperature above 180 °C that is a melting temperature of lithium. For example, the lithium immobilizer may react with liquid lithium to convert lithium into an insoluble compound. The lithium immobilizer may be, for example, a metal oxide reactive with liquid lithium. The metal oxide included in the filler may be, for example, TiO₂, ZrO₂, HfO₂, ThO₂, or any combination thereof. The metal oxide may react, for example, with a liquid lithium to produce Li₂O and a metal. A reaction scheme thereof may be, for example, 4Li + MO₂ -> M + 2Li₂O. The liquid lithium may be immobilized because the liquid lithium reacts with the metal oxide to form a lithium oxide. Leakage of the liquid lithium melting at a high temperature into the positive electrode layer may be inhibited. Therefore, stability of the all-solid secondary battery may be increased.

An amount of the filler included in the flame-retardant inactive member may be, for example, from about 1 part by weight to about 80 parts by weight, from about 5 parts by weight to about 80 parts by weight, from about 10 parts by weight to about 80 parts by weight, from about 20 parts by weight to about 80 parts by weight, from about 30 parts by weight to about 80 parts by weight, from about 40 parts by weight to about 80 parts by weight, from about 50 parts by weight to about 80 parts by weight, from about 60 parts by weight to about 80 parts by weight, or from about 65 parts by weight to about 80 parts by weight based on 100 parts by weight of the flame-retardant inactive member 40.

The flame-retardant inactive member may further include, for example, a binder. The binder may include, for example, a curable polymer or a non-curable polymer. The curable polymer may be a polymer cured by heat and/or pressure. The curable polymer may be, for example, a solid at room temperature. The flame-retardant inactive member may include, for example, a thermo-pressure curable film and/or a cured product thereof. The thermo-pressure curable polymer may be, for example, TSA-66 manufactured by Toray.

The flame-retardant inactive member may further include another material in addition to the previously-described substrate, reinforcement, filler, and binder. The flame-retardant inactive member may further include, for example, at least one selected from among paper, an insulating polymer, an ion-conductive polymer, an insulating inorganic material, an oxide-based solid electrolyte, and a sulfide-based solid electrolyte. The insulating polymer may be, for example, an olefin-based polymer such as polypropylene (PP) and polyethylene (PE).

A density of the substrate or the reinforcement included in the flame-retardant inactive member may be, for example, about 10 % to about 300 %, about 10 % to about 150 %, about 10 % to about 140 %, about 10 % to about 130 %, or about 10 % to about 120 % of the density of the positive active material included in the positive active material layer 12.

The inactive member 40 may be a member not including an electrochemically active material, such as an electrode active material. The electrode active material may be a material that allows intercalation/deintercalation of lithium. The inactive member 40 may be formed of any material commonly utilized in the art, other than the electrode active material.

### Preparation of All-solid Secondary Battery

### Preparation of Negative Electrode Layer

A method of manufacturing a negative electrode layer may include, for example, providing a negative current collector; and sequentially providing a first protective layer and a first negative active material layer, wherein the first negative active material layer includes a carbonaceous material matrix and a metallic negative active material located in the carbonaceous material matrix, the carbonaceous material matrix includes a first carbonaceous nanostructure, and the first protective layer includes a second carbonaceous nanostructure.

The negative current collector may be provided. For detailed descriptions of the negative current collector, refer to the previously-described negative current collector.

The sequentially providing of the first protective layer and the first negative active material layer may include, for example, providing a negative active material precursor onto the negative current collector; and supplying a reaction gas including a carbon source gas to the negative current collector provided with the negative active material precursor, followed by heat treatment. During the heat treatment, the negative active material may be formed from the negative active material precursor, the second carbonaceous nanostructure may grow by a gas phase reaction between the negative current collector and the negative active material to form a first protective layer, and the first carbonaceous nanostructure may grow by the gas phase reaction on the negative active material to form a first negative active material layer.

The providing of the negative active material precursor onto the negative current collector may be performed, for example, by providing a precursor compound including a metal capable of forming an alloy or compound with lithium onto the negative current collector. The negative active material precursor may be provided by a dry or wet method. For example, the negative active material precursor may be disposed on the negative current collector by applying a solution of the negative active material precursor to the negative current collector and drying the solution. The metal capable of forming an alloy or compound with lithium may include gold (Au), platinum (Pt), palladium (Pd), silicon (Si), silver (Ag), aluminum (Al), bismuth (Bi), tin (Sn), and zinc (Zn), or any combination thereof. The precursor compound including the metal capable of forming an alloy or compound with lithium may be, for example, a nitrate, halide, phosphate, or sulfate of the metal capable of forming an alloy or compound with lithium, but is not limited thereto, and any compounds commonly utilized in the art as a precursor compound may also be utilized. The Ag-containing precursor compound may be, for example, silver nitrate (AgNOs), silver acetate (CH₃COOAg), and silver diamine chloride (Ag(NH₃)₂Cl). The solvent dissolving the precursor compound may be, for example, water and alcohol, but is not limited thereto. The alcohol may be, for example, methanol or ethanol.

Subsequently, the reaction gas including a carbon source gas may be supplied to the negative current collector provided with the negative active material precursor and heat-treated. The carbon source gas may further include, for example, at least one inert gas selected from among nitrogen, helium, and argon.

The carbon source gas may be a compound represented by Formula 9, a compound represented by Formula 10, a compound represented by Formula 11, or a mixed gas of at least two compounds selected from the compounds represented by Formulae 9, 10, and 11.

**Formula 9** **CₙH₂ₙ₊₂**

In Formula 9, n may be from 1 to 20.

**Formula 10** **CₙH₂ₙ**

In Formula 10, n may be from 2 to 6.

**Formula 11** **CₙHₙ**

In Formula 11, n may be from 2 to 6.

The compound represented by Formula 9, the compound represented by Formula 10, and the compound represented by Formula 11 may include, for example, at least one selected from methane, acetylene, ethylene, and propylene.

After supplying the reaction gas including the carbon source gas to the negative current collector provided with the negative active material precursor and performing heat treatment, a cooling process utilizing at least one inert gas selected from nitrogen, helium, and argon may further be performed. The cooling process may refer to a process of adjusting the temperature to room temperature (about 20 °C to about 25 °C).

In the method of manufacturing the negative electrode layer, a process of growing the carbonaceous material to form the first protective layer and the first negative active material layer may be performed under one or more suitable conditions according to the gas phase reaction.

Under a first condition, for example, first, methane may be supplied to a reactor in which the negative current collector provided with the negative active material precursor is placed, and the reactor may be heated to a heat treatment temperature T. A heating time up to the heat treatment temperature T may be from 10 minutes to 4 hours, and the heat treatment temperature (T) may be from about 500 °C to about 1100 °C. Heat treatment may be performed at the heat treatment temperature T for a reaction time. The reaction time may be, for example, from about 10 minutes to about 8 hours. The resultant product of heat treatment may be cooled to room temperature to prepare a negative electrode layer. A cooling time from the heat treatment temperature T to room temperature may be, for example, from about 10 minutes to about 5 hours.

Under a second condition, for example, first, hydrogen may be supplied to a reactor in which the negative current collector provided with the negative active material precursor is placed, and temperature may be raised to the heat treatment temperature T. A heating time up to the heat treatment temperature T may be from about 10 minutes to about 4 hours, and the heat treatment temperature (T) may be from about 500 °C to about 1100 °C. After heat treatment may be performed at the heat treatment temperature T for a set or predetermined reaction time, methane gas is supplied, and heat treatment may be performed for a residual reaction time. The reaction time may be, for example, from about 10 minutes to about 8 hours. A product of heat treatment may be cooled to room temperature to prepare a negative electrode layer. Nitrogen may be supplied during the process of cooling the product. A cooling time from the heat treatment temperature T to room temperature may be, for example, from about 10 minutes to about 5 hours.

Under a third condition, for example, first, hydrogen may be supplied to a reactor in which the negative current collector provided with the negative active material precursor is placed, and temperature may be raised to the heat treatment temperature T. A heating time up to the heat treatment temperature T may be from about 10 minutes to about 4 hours, and the heat treatment temperature (T) may be from about 500 °C to about 1100 °C. After heat treatment is performed at the heat treatment temperature T for set or predetermined reaction time, a mixed gas of methane and hydrogen may be supplied and heat treatment may be performed for residual reaction time. The reaction time may be, for example, from about 10 minutes to about 8 hours. The resultant product of heat treatment may be cooled to room temperature to prepare a composite. Nitrogen may be supplied during the process of cooling the product. A cooling time from the heat treatment temperature T to room temperature may be, for example, from about 10 minutes to about 5 hours.

The carbon source gas may be, for example, methane; acetylene; a mixed gas including methane and an inert gas; or a mixed gas including acetylene and an inert gas.

The carbon source gas may be, for example, a mixed gas of methane and nitrogen. In the mixed gas of methane and nitrogen, a molar ratio of methane to nitrogen may be from about 1:0.20 to about 1:0.50, from about 1:0.25 to about 1:0.45, or from about 1:0.30 to about 1:0.40. The carbon source gas may not include (e.g., may exclude) the inert gas such as nitrogen. The carbon source gas may be, for example, a mixed gas of acetylene and nitrogen. In the mixed gas of acetylene and nitrogen, a molar ratio of acetylene to nitrogen may be from about 1:0.20 to about 1:0.50, from about 1:0.25 to about 1:0.45, or from about 1:0.30 to about 1:0.40. The carbon source gas may not include (e.g., may exclude) the inert gas such as nitrogen.

A heat treatment pressure may be selected in consideration of the heat treatment temperature, a composition of the gas mixture, and a desired or suitable thickness of the negative electrode layer. The heat treatment pressure may be controlled or selected by adjusting an amount of an inflowing gas mixture and an amount of an outflowing gas mixture. The heat treatment pressure may be, for example, about 0.5 atm or more, about 1 atm or more, about 2 atm or more, about 3 atm or more, about 4 atm or more, or about 5 atm or more.

A heat treatment time is not limited and may be appropriately adjusted according to heat treatment temperature, heat treatment pressure, a composition of the gas mixture, and a desired or suitable thickness of the negative electrode layer. For example, a reaction time at the heat treatment temperature may be from about 10 minutes to about 100 hours, from about 30 minutes to about 90 hours, or from about 50 minutes to about 40 hours. As the heat treatment time increases, the amount of the growing carbonaceous nanostructure may increase, and electrochemical properties of the negative electrode layer prepared thereby may be improved. However, this tendency may not necessarily be proportional to time. For example, after a set or predetermined time has elapsed, the growth of the carbonaceous nanostructure may no longer occur or a growth rate may decrease.

### Preparation of Solid Electrolyte Layer

The solid electrolyte layer may be prepared by a dry or wet method.

A method of manufacturing the solid electrolyte layer by a dry method may include: preparing a dry mixture by dry mixing a sulfide-based solid electrolyte and a binder; preparing a solid electrolyte layer by forming the dry mixture; and disposing the solid electrolyte layer between a positive electrode layer and a negative electrode layer.

First, the sulfide-based solid electrolyte may be dry mixed with the binder to prepare a dry mixture. Dry mixing may refer to mixing in a state not including a processing solvent. The dry mixture may refer to a mixture to which a processing solvent is not intentionally added. The processing solvent may be, for example, a solvent utilized to prepare an electrode slurry. The binder may be, for example, a dry binder. The dry binder may refer to a binder not including a processing solvent. The processing solvent may be, for example, water and N-methyl-2-pyrrolidone (NMP), but is not limited thereto, and any processing solvents commonly utilized to prepare electrode slurries may be utilized. The dry mixing may be performed by utilizing a stirrer at a temperature of, for example, about 25 to about 85 °C or about 65 to about 85 °C. The dry mixing may be performed by utilizing a stirrer at a rotational speed of, for example, about 10 rpm to about 10000 rpm or about 100 rpm to about 10000 rpm. The dry mixing may be performed, for example, utilizing a stirrer for about 1 minute to about 200 minutes. The dry mixing may be performed, for example, once or more. By the dry mixing, a dry mixture including a fibrillated dry binder may be obtained. The stirrer may be, for example, a mixer or a kneader. The stirrer may include, for example, a chamber; at least a rotary shaft disposed in the chamber and rotating; and a blade rotatably coupled to the rotary shaft and arranged in a longitudinal direction of the rotary shaft. The blade may include, for example, at least one selected from among a ribbon blade, a sigma blade, a Z blade, a dispersion blade, and a screw blade. By including the blade, the electrode active material, the dry conductive material, and the dry binder may be effectively mixed to prepare a dough-like mixture without utilizing a solvent.

Subsequently, the dry mixture may be formed to prepare a solid electrolyte layer. The prepared dry mixture may be extruded into a sheet form by utilizing an extrusion device. A pressure during the extrusion may be, for example, from about 4 MPa to about 100 MPa or from about 10 MPa to about 90 MPa. The obtained mixture may be a sheet form. For example, the obtained mixture in the sheet form may be a solid electrolyte layer. The extrusion device may be, for example, a roller or an extruder. For descriptions of types (kinds) and amounts of the sulfide-based solid electrolyte and the binder, refer to the previously-described solid electrolyte layer. The binder may not need to be provided (e.g., may be excluded). For example, the sulfide-based solid electrolyte particles may be partially sintered, and thus the binder may not need to be provided (e.g., may be excluded).

A method of manufacturing a solid electrolyte layer by a wet method may include: preparing a slurry by mixing a sulfide-based solid electrolyte, a binder, and a solvent; preparing a solid electrolyte layer by forming and drying the slurry; and disposing the solid electrolyte layer between a positive electrode layer and a negative electrode layer.

First, a sulfide-based solid electrolyte, a binder, and a solvent may be mixed to prepare a slurry. For descriptions of the sulfide-based solid electrolyte and the binder, refer to the previously-described solid electrolyte layer. The binder may be the same as or different from the binder utilized in the dry method. The binder included in the solid electrolyte layer may be, for example, styrene butadiene rubber (SBR), polytetrafluoroethylene, polyvinylidene fluoride, or polyethylene, but is not limited thereto, and any binders commonly available in the art may also be utilized. The solvent is not limited, and any solvent capable of dissolving the binder without reacting with the sulfide-based solid electrolyte may also be utilized. The solvent may be, for example, octyl acetate.

Subsequently, the slurry may be formed and dried to prepare a solid electrolyte layer. For example, a solid electrolyte layer may be prepared by applying the slurry to a substrate, followed by drying, and separating the dried resultant. Methods for applying the slurry and drying conditions may be within the ranges commonly available in the art.

Subsequently, the solid electrolyte layer may be disposed between the positive electrode layer and the negative electrode layer. The solid electrolyte layer may be disposed on the positive electrode layer and/or the negative electrode layer after being prepared as a separate layer as described above or by applying a slurry to the positive electrode layer and/or the negative electrode layer and drying the slurry.

### Preparation of Positive Electrode Layer

The positive electrode layer may be prepared by a wet or dry method.

The positive electrode layer may be prepared, for example, by a wet method. A positive active material, a sulfide-based solid electrolyte, a conductive material, a binder, and a solvent may be mixed to prepare a positive electrode slurry. The positive electrode slurry may be applied on a positive current collector and dried to prepare a positive electrode layer. A solvent utilized for preparation of the positive electrode slurry is not limited, and any solvents commonly utilized in the art in positive electrode slurries may also be utilized. The solvent utilized in the positive electrode slurry may be, for example, para-xylene. For descriptions of types (kinds) and amounts of the positive current collector, the positive active material, the conductive material, and the binder, refer to the previously-described positive electrode layer.

The positive electrode layer may be prepared, for example, by a dry method. First, a positive active material, a sulfide-based solid electrolyte, a conductive material, and a binder may be mixed by a dry method to prepare a dry mixture. Subsequently, the dry mixture may be formed to prepare a positive active material layer. Then, the positive active material layer may be disposed on at least one side (e.g., one or both (e.g., opposite) sides) of the positive current collector and pressed to prepare a positive electrode layer. The binder may be, for example, a dry binder. Preparation conditions and methods for the process of preparing and forming the dry mixture may be substantially identical to the previously-described preparation methods for the solid electrolyte layer. For descriptions of types (kinds) and amounts of the positive current collector, the positive active material, the conductive material, and the binder, refer to the previously-described positive electrode layer.

### Preparation of All-solid Secondary Battery

An all-solid secondary battery may be prepared, for example, as described previously.

First, an electrode assembly including: a positive electrode layer; a negative electrode layer; and a solid electrolyte layer disposed between the positive electrode layer and the negative electrode layer may be provided.

The solid electrolyte layer may be disposed on the negative electrode layer such that the negative active material layer is in contact with the solid electrolyte layer to prepare a negative electrode layer/solid electrolyte layer stack structure. Then, the solid electrolyte layer may be disposed on at least one side (e.g., one or both (e.g., opposite) sides) of the positive electrode layer to face the positive active material layer to prepare a negative electrode layer/solid electrolyte layer/positive electrode layer stack structure. A gasket as an inactive member may be arranged around the positive electrode layer to surround side surfaces of the positive electrode layer. The prepared negative electrode layer/solid electrolyte layer/positive electrode layer stack structure may be plate pressed at a temperature of about 50 °C to about 100 °C with a pressure of about 300 MPa to 600 MPa for about 10 minutes to about 60 minutes. By such pressing treatment, the solid electrolyte layer may be partially sintered to improve battery characteristics. The pressed stack structure may be provided as an electrode assembly. The electrode assembly may be sealed utilizing a sealant to complete the manufacture of the all-solid secondary battery.

Hereinafter, one or more example embodiments of the present disclosure will be described in more detail with reference to the following examples and comparative examples. However, these examples are not intended to limit the purpose and scope of the one or more example embodiments.

### Example 1: Methane 1000 °C, Horizontally Arranged Graphene Layer (First Protective Layer)/Ag-embedded Horizontally Arranged Graphene Layer (First Negative Active Material Layer), Mono-cell All-solid Secondary Battery

### Preparation of Solid Electrolyte Layer, Dry

1 part by weight of a polytetrafluoroethylene (PTFE) first binder and 1 part by weight of a polyvinylidene fluoride (PVDF) second binder were added to 98 parts by weight of a Li₆PS₅Cl sulfide-based solid electrolyte (D₅₀ = 10 mm, crystalline) that is argyrodite-type or kind crystal and mixed in a grind mixer to prepare a mixture. The mixture was added a mortar heated to 80 °C and stirred to prepare a dough. The prepared dough was passed through rollers to a sheet form to prepare a solid electrolyte layer having a substantially uniform thickness. By the previously-described process, a solid electrolyte layer was prepared. A Young's modulus of the sulfide-based solid electrolyte was from about 15 GPa to about 30 GPa.

### Preparation of Negative Electrode Layer

A carbon layer as a first protective layer and a negative active material-containing carbon layer as a first negative active material layer were sequentially deposited on one side of a 20 µm-thick Cu foil to prepare a negative electrode.

The first protective layer and the first negative active material layer were formed according to a method described herein.

AgNOs, as an Ag precursor compound, was dissolved in methanol, as an organic solvent, to prepare an Ag precursor compound-containing composition.

After applying the Ag precursor compound-containing composition to the Cu foil, the organic solvent was removed to prepare an Ag precursor compound-coated Cu foil.

After placing the Ag precursor compound-coated Cu foil in a chamber, a temperature was raised to about 1000 °C while supplying a mixture of a methane gas as a hydrocarbon gas and an argon gas as an inert gas to directly grow graphene horizontally arranged on the Cu foil.

At a chamber temperature of about 400 °C and above, Ag ions were reduced to Ag particles and graphene horizontally arranged on the Cu current collector directly grew and were stacked to form a carbon layer. The carbon layer was formed between the Cu current collector and the Ag particles.

At a chamber temperature of about 1000 °C, graphene grew from the Ag particles to form a carbonaceous material matrix including graphene horizontally arranged on the carbon layer. The Ag particles were dispersedly embedded in the carbonaceous material matrix. A shell including amorphous carbon was formed on the surface of the Ag particle. The Ag core had a particle diameter of about 50 nm. The shell had a thickness of about 10 nm.

The carbon layer, as the first protective layer, had a thickness of about 500 nm. The Ag-containing carbon layer, as the first negative active material layer, had a thickness of about 3 µm.

It was confirmed that the first protective layer included graphene arranged and stacked in a direction parallel to the surface of the Cu current collector based on cross-sectional images of the negative electrode obtained by a transmission electron microscope (TEM) and a high-resolution scanning electron microscope (HR-SEM). It was also confirmed that the first negative active material layer included graphene arranged in a direction parallel to the surface of the Cu current collector and Ag cores. It was also confirmed that shells including amorphous carbon were formed on the Ag cores.

### Preparation of Positive Electrode Layer

Li₂O-ZrO₂ (LZO)-coated LiNi_{0.8}Co_{0.15}Mn_{0.05}O₂ (NCM) was prepared as a positive active material. The LZO-coated positive active material was prepared according to the method disclosed in Korean Patent Laid-open Publication No. 10-2016-0064942. As a solid electrolyte, Li₆PS₅Cl (D50=0.5 µm, crystalline) that is argyrodite-type or kind crystal was prepared. As a binder, a polytetrafluoroethylene (PTFE) binder was prepared. As a conductive material, carbon nanofibers were prepared. These materials were mixed with a xylene solvent such that a weight ratio of the positive active material: solid electrolyte: conductive material: binder was about 84:11.5: 3:1.5 to prepare a slurry. The slurry was formed in a sheet form and dried in a vacuum at about 40 °C for about 8 hours to prepare a positive electrode sheet. The prepared positive electrode sheet was disposed on a carbon layer of a positive current collector, which is formed of an Al foil coated with the carbon layer on one side, and roll pressed while heating at about 85 °C to prepare a positive electrode layer. A total thickness of the positive electrode layer was about 120 µm. The positive active material layer had a thickness of about 95 µm, and the carbon-coated Al foil had a thickness of about 25 µm.

### Inactive Member

A slurry prepared by mixing pulp fibers (cellulose fibers), glass fibers, aluminum hydroxide (Al(OH)₃), an acrylic binder, and a solvent was formed in a gasket form, and the solvent was removed therefrom to prepare a flame-retardant inactive member.

A weight ratio of the pulp fibers (cellulose fibers), glass fibers, aluminum hydroxide (Al(OH)₃), and the acrylic binder was about 20:8:70:2. The inactive member had a thickness of about 120 µm. The prepared flame-retardant member was left at room temperature for one week and then utilized.

The inactive member was heat-treated in a vacuum at about 80 °C for about 5 hours to remove moisture from the inactive member before being applied to an all-solid secondary battery.

### Preparation of All-solid Secondary Battery

Referring to FIG. 3, the solid electrolyte layer was disposed on the negative electrode layer such that the first negative active material layer was in contact with the solid electrolyte layer. The flame-retardant inactive member was disposed on the solid electrolyte layer by pressing while heating to prepare a negative electrode layer/solid electrolyte layer/inactive member stack structure.

The inactive member was disposed on one side of the positive electrode layer to face the positive active material layer to prepare a negative electrode layer/solid electrolyte layer/positive electrode layer electrode assembly. The inactive member was disposed around the positive electrode layer to surround side surfaces of the positive electrode layer and to be in contact with the solid electrolyte layer. The inactive member was utilized as a gasket. The positive electrode layer was located at a central region of the solid electrolyte layer, and the gasket is located to surround the positive electrode layer and to extend to an end portion of the solid electrolyte layer. An area of the positive electrode layer was about 90 % of the area of the solid electrolyte layer, and the gasket was located over the entire area of the remaining about 10 % area of the solid electrolyte layer on which the positive electrode layer was not located.

The prepared negative electrode layer/solid electrolyte layer/positive electrode layer electrode assembly was plate pressed at about 85 °C with a pressure of about 500 MPa for about 30 minutes. By such pressing treatment, the solid electrolyte layer was sintered to improve battery characteristics. The sintered solid electrolyte layer had a thickness of about 45 µm. The sintered electrode assembly was added to a pouch and sealed to prepare a sealed electrode assembly. Portions of the positive current collector and the negative current collector protruding toward the outside of the sealed electrode assembly were utilized as a positive electrode layer terminal and a negative electrode layer terminal.

The electrode assembly was disposed between two press plates and the two press plates were fastened together with screws, and then a constant pressure was applied to both (e.g., opposites) sides of the electrode assembly to prepare an all-solid secondary battery.

### Example 2: Methane 850 °C, Horizontally Arranged Graphene Layer (First Protective Layer)/Ag-embedded Irregularly Located Graphene Layer (First Negative Active Material Layer), Mono-cell All-solid Secondary Battery

A negative electrode and an all-solid secondary battery were prepared in substantially the same manner as in Example 1, except that the deposition temperature was changed to about 850 °C.

A carbon layer as a first protective layer and a negative active material-containing carbon layer as a first negative active material layer were sequentially deposited on one side of an about 20 µm-thick Cu foil to prepare a negative electrode.

The first protective layer had a structure in which graphenes horizontally arranged with respect to the surface of the Cu foil were stacked in multiple layers.

The first negative active material layer had a structure in which a carbonaceous material matrix including flake-shaped graphenes non-uniformly located therein was dispersed and Ag particles, as a negative active material, were dispersed in the carbonaceous material matrix.

Shells including amorphous carbon were coated on the Ag particles.

The carbon layer, as the first protective layer, had a thickness of about 500 nm. The Ag-containing carbon layer, as the first negative active material layer, had a thickness of about 3 µm.

It was confirmed that the first protective layer included graphene arranged and stacked in a direction parallel to the surface of the Cu current collector based on cross-sectional images of the negative electrode obtained by a transmission electron microscope (TEM) and a high-resolution scanning electron microscope (HR-SEM). It was also confirmed that the first negative active material layer included irregularly located graphene and Ag cores. It was also confirmed that the shells included amorphous carbon and are disposed on the Ag cores.

### Example 3: Acetylene, 800 °C, Protruding Graphene Layer (First Protective Layer)/Ag-embedded Irregularly Located Graphene Layer (First Negative Active Material Layer), Mono-cell All-solid Secondary Battery

A negative electrode and an all-solid secondary battery were prepared in substantially the same manner as in Example 1, except that the deposition temperature was changed to about 800 °C and the hydrocarbon gas was changed to acetylene.

A carbon layer as a first protective layer and a negative active material-containing carbon layer as a first negative active material layer were sequentially deposited on one side of an about 20 µm-thick Cu foil to prepare a negative electrode.

The first protective layer had a structure in which graphene was stacked in multiple layers in a direction protruding from the surface of the Cu foil.

The first negative active material layer had a structure in which a carbonaceous material matrix including flake-shaped graphenes non-uniformly located therein was dispersed and Ag particles, as a negative active material, were dispersed in the carbonaceous material matrix.

Shells including amorphous carbon were coated on the Ag particles. The first negative active material layer had pores formed by irregularly located graphene in the carbonaceous material matrix.

The carbon layer, as the first protective layer, had a thickness of about 500 nm. The Ag-containing carbon layer, as the first negative active material layer, had a thickness of about 3 µm.

It was confirmed that the first protective layer included graphene arranged and stacked in a direction protruding from the surface of the Cu current collector based on cross-sectional images of the negative electrode obtained by a transmission electron microscope (TEM) and a high-resolution scanning electron microscope (HR-SEM). It was also confirmed that the first negative active material layer included graphene irregularly located therein and Ag cores. It was also confirmed that shells including amorphous carbon were formed on the Ag cores.

### Example 4: Acetylene, 600 °C, Protruding Graphene Layer (First Protective Layer)/Ag-embedded Irregularly Located Graphene Layer (First Negative Active Material Layer), Mono-cell All-solid Secondary Battery

A negative electrode and an all-solid secondary battery were prepared in substantially the same manner as in Example 1, except that the deposition temperature was changed to about 600 °C and the hydrocarbon gas was changed to acetylene.

A carbon layer as a first protective layer and a negative active material-containing carbon layer as a first negative active material layer were sequentially deposited on one side (both sides) of an about 20 µm-thick Cu foil to prepare a coated negative current collector.

The first protective layer had a structure in which graphene was stacked in multiple layers in a direction protruding from the surface of the Cu foil.

The first negative active material layer had a structure in which a carbonaceous material matrix including flake-shaped graphenes non-uniformly located therein was dispersed and Ag particles, as a negative active material, were dispersed in the carbonaceous material matrix.

Shells including amorphous carbon were coated on the Ag particles. The first negative active material layer had pores formed by irregularly located graphene in the carbonaceous material matrix.

The first negative active material layer of Example 4 had a porosity greater than a porosity of the first negative active material layer of Example 3.

The carbon layer, as the first protective layer, had a thickness of about 500 nm. The Ag-containing carbon layer, as the first negative active material layer, had a thickness of about 3 µm.

It was confirmed that the first protective layer included graphene arranged and stacked in a direction protruding from the surface of the Cu current collector based on cross-sectional images of the negative electrode obtained by a transmission electron microscope (TEM) and a high-resolution scanning electron microscope (HR-SEM). It was also confirmed that the first negative active material layer included graphene irregularly located therein and Ag cores. It was also confirmed that shells including amorphous carbon were formed on the Ag cores.

### Example 5: Bi-cell All-solid Secondary Battery Preparation of Solid Electrolyte Layer, Negative Electrode Layer, and Inactive Member

Preparation was performed in substantially the same manner as in Example 1.

### Preparation of Positive Electrode Layer

Li₂O-ZrO₂ (LZO)-coated LiNi_{0.8}Co_{0.15}Mn_{0.05}O₂ (NCM) was prepared as a positive active material. The LZO-coated positive active material was prepared according to the method disclosed in Korean Patent Laid-open Publication No. 10-2016-0064942, the entire content of which is incorporated herein by reference. As a solid electrolyte, Li₆PS₅Cl (D50 = 0.5um, crystalline) that is argyrodite-type or kind crystal was prepared. As a binder, a polytetrafluoroethylene (PTFE) binder was prepared. As a conductive material, carbon nanofibers were prepared. These materials were mixed with a xylene solvent such that a weight ratio of the positive active material: solid electrolyte: conductive material: binder was about 84:11.5: 3:1.5 to prepare a slurry. The slurry was formed in a sheet form and dried in a vacuum at about 40 °C for about 8 hours to prepare a positive electrode sheet. The prepared positive electrode sheet was disposed on at least one side of a positive current collector, which is formed of an Al foil coated with the carbon layer on both (e.g., simultaneously) sides, and roll pressed while heating at about 85 °C to prepare a positive electrode layer. A total thickness of the positive electrode layer was about 220 µm. The positive active material layer had a thickness of about 96 µm, and the carbon-coated Al foil had a thickness of about 28 µm.

### Preparation of All-solid Secondary Battery

Referring to FIG. 5, the solid electrolyte layer was disposed on the negative electrode layer such that the first negative active material layer was in contact with the solid electrolyte layer. The flame-retardant inactive member was disposed on the solid electrolyte layer by pressing while heating to prepare two negative electrode layer/solid electrolyte layer/inactive member stack structures.

The inactive member was disposed on at least one side of the positive electrode layer to face the positive active material layer to prepare a negative electrode layer/solid electrolyte layer/positive electrode layer /solid electrolyte layer/negative electrode layer electrode assembly. The inactive member was disposed around the positive electrode layer to surround side surfaces of the positive electrode layer and to be in contact with the solid electrolyte layer. The inactive member was utilized as a gasket. The positive electrode layer was located at a central region of the solid electrolyte layer, and the gasket was located to surround the positive electrode layer and to extend to an end portion of the solid electrolyte layer. An area of the positive electrode layer was about 90 % of an area of the solid electrolyte layer, and the gasket was located over the entire area of the remaining about 10 % area of the solid electrolyte layer on which the positive electrode layer was not located.

An all-solid secondary battery was prepared in substantially the same manner as in Example 1 by utilizing the prepared electrode assembly.

### Comparative Example 1: Coating Layer-free Negative Electrode Layer

A negative electrode and an all-solid secondary battery were prepared in substantially the same manner as in Example 1, except that the about 20 µm-thick Cu foil was utilized as a negative electrode layer.

### Comparative Example 2: Negative Electrode Layer Only Including Carbon Layer (First Protective Layer), (First Negative Active Material Layer-Omitted)

A negative electrode and an all-solid secondary battery were prepared in substantially the same manner as in Example 1, except that only the carbon layer, as the first protective layer, was introduced onto one side of the about 20 µm-thick Cu foil without utilizing the Ag precursor compound.

### Comparative Example 3: Graphene-Wet coated (First Protective Layer) + Ag-Carbon-wet coated (First Negative Active Material Layer) Negative Electrode Layer)

A negative electrode and an all-solid secondary battery were prepared in substantially the same manner as in Example 1, except that a first protective layer and a first negative active material layer were introduced onto one side of the about 20 µm-thick Cu foil by a wet method, respectively.

The negative electrode layer was prepared according to the following method.

### Preparation of Negative Electrode Layer

A negative electrode layer was prepared by applying a carbon layer and a first negative active material layer to one side of an about 20 µm-thick Cu foil by a wet coating method.

The carbon layer was prepared by applying a graphene dispersion to the Cu foil and drying. The graphene dispersion was prepared by dispersing a graphene oxide and a polyvinylidene fluoride (PVDF) binder in N-methyl pyrrolidone.

As a negative active material, carbon black (CB) having a primary particle diameter of about 30 nm and silver (Ag) particles having an average particle diameter (D50) of about 60 nm were prepared.

4 g of mixed powder of the carbon black (CB) and silver (Ag) particles in a weight ratio of about 3:1 was added to a container, and about 4 g of a NMP solution including about 7 wt% of a PVDF binder (# 9300 manufactured by Kureha Corporation) was added thereto to prepare a mixed solution. Subsequently, NMP was gradually added to the mixed solution while stirring the mixed solution to prepare a slurry. The prepared slurry was applied to the prepared carbon layer of the negative electrode layer by utilizing a bar coater and dried in the air at about 80 °C for about 10 minutes. A stack structure obtained thereby was dried at about 40 °C for about 10 hours in a vacuum. The dried stack structure was cold roll pressed to planarize the surface of the first negative active material layer of the stack structure. According to the previously-described process, a negative electrode layer was prepared.

The first negative active material layer included in the negative electrode layer had a thickness of about 10 µm. The carbon layer, as the first protective layer, had a thickness of about 1 µm.

### Reference Example 1: Inactive Member-free

An all-solid secondary battery was prepared in substantially the same manner as in Example 1, except that the inactive member was not disposed around the positive active material layer.

### Evaluation Example 1: Evaluation of Crystallinity and Porosity

Crystallinity of the negative electrode layers prepared in Examples 1 to 4 was evaluated by utilizing XRD, Raman, and TEM.

Relative crystallinity of the negative electrode layers was evaluated by utilizing relative peak intensity ratios (I_{D}/I_{G}) of D-band peak intensity (I_{D}) at around 1350 cm⁻¹ derived from amorphous carbon to G-band peak intensity (I_{G}) at around 1580 cm⁻¹ derived from crystalline carbon in Raman spectra of the negative electrode layers. As the peak intensity ratio (I_{D}/I_{G}) increases, crystallinity decreases. As the peak intensity ratio (I_{D}/I_{G}) decreases, crystallinity increases. Measurement results are shown in Table 1.

For example, relative crystallinity of the negative electrode layers was evaluated by utilizing peak intensity and/or full width at half maximum in the XRD spectra of the negative electrode layers and high-resolution TEM images and diffraction patterns of the negative electrode layers.

Porosity of the negative electrode layers prepared in Examples 1 to 4 was measured by utilizing a nitrogen gas adsorption method (multi-point BET). Measurement results are shown in Table 1.

Crystallinity and porosity were evaluated on the first negative active material layer and the first protective layer of the negative electrode layer.

The negative electrode layer prepared in Example 1 had the highest crystallinity, and the negative electrode layer prepared in Example 4 had the lowest crystallinity.

In the all-solid secondary batteries of Examples 1 to 4, the relative crystallinity of the negative electrode layers was in the order of Example 1 > Example 2 > Example 3 > Example 4.

The negative electrode layer prepared in Example 1 had the lowest relative porosity, and the negative electrode layer prepared in Example 4 had the highest relative porosity.

In the all-solid secondary batteries of Examples 1 to 4, the relative porosity of the negative electrode layers was in the order of Example 4 > Example 3 > Example 2 > Example 1.

**Table 1**

| | Raman peak intensity ratio (I_{D}/I_{G}) | Porosity [%] |
|---|---|---|
| Example 1 (1000 °C, methane) | Less than 1 | Less than 1 |
| First protective layer: horizontally arranged graphene | | |
| First negative active material layer: horizontally arranged graphene + Ag particle-embedded | | |
| Example 2 (850 °C, methane) | 1.5 | 3 |
| First protective layer: horizontally arranged graphene | | |
| First negative active material layer: irregularly located graphene + Ag particle-embedded | | |
| Example 3 (800 °C, acetylene) | 2.0 | 7.5 |
| First protective layer: protruding graphene | | |
| First negative active material layer: irregularly located graphene + Ag particle-embedded | | |
| Example 4 (600 °C, acetylene) | 4.0 | 15 |
| First protective layer: protruding graphene | | |
| First negative active material layer: irregularly located graphene + Ag particle-embedded | | |
| Comparative Example 2 (Cu/Dry graphene layer structure) | Less than 1 | Less than 0.5 |
| First protective layer: horizontally arranged graphene | | |
| First negative active material layer: free | | |

### Evaluation Example 2: Charging/discharging Test

Charging and discharging characteristics of each of the all-solid secondary batteries prepared in Examples 1 to 5, Comparative Examples 1 to 3, and Reference Example 1 were evaluated by the following charging/discharging test. The charging and discharging test were performed by placing the all-solid secondary battery in a thermostatic bath at 45 °C.

A first cycle was performed by charging each battery at a constant current of 0.1 C until a battery voltage reached 4.2 V. Once the voltage reached 4.2 V, the battery was charged at a constant voltage of 4.2 V under a cut-off condition of 0.05 C. Subsequently, the battery was discharged at a constant current of 0.1 C until the battery voltage reached 2.6 V.

From the second cycle, the charging and discharging were repeated 1250 times under the same conditions as the first cycle. An increased number of cycles at which a short circuit occurs suggests improved lifespan characteristics. Measurement results are shown in Table 2.

**Table 2**

| | No. of cycles at which short circuit occurs [times] |
|---|---|
| Example 1 (1000 °C, methane) | 1250 |
| First protective layer: horizontally arranged graphene | |
| First negative active material layer: horizontally arranged graphene + Ag particle-embedded | |
| Example 2 (850 °C, methane) | 1120 |
| First protective layer: horizontally arranged graphene | |
| First negative active material layer: irregularly located graphene + Ag particle-embedded | |
| Example 3 (800 °C, acetylene) | 950 |
| First protective layer: protruding graphene | |
| First negative active material layer: irregularly located graphene + Ag particle-embedded | |
| Example 4 (600 °C, acetylene) | 650 |
| First protective layer: protruding graphene | |
| First negative active material layer: irregularly located graphene + Ag particle-embedded | |
| Comparative Example 1 (Cu foil alone) | 15 |
| First protective layer: free | |
| First negative active material layer: free | |
| Comparative Example 2 (Cu/Dry graphene layer structure) | 225 |
| First protective layer: horizontally arranged graphene | |
| First negative active material layer: free | |
| Comparative Example 3 (Cu/Wet graphene layer/Ag + C blend layer (Ag + C wet coated)) | 198 |
| First protective layer: wet graphene layer | |
| First negative active material layer: Ag+C blend layer | |

As shown in Table 2, the all-solid secondary batteries of Examples 1 to 4 provided improved lifespan characteristics compared to the all-solid secondary batteries of Comparative Examples 1 to 3.

The all-solid secondary battery of Example 4 had a relatively lower crystallinity of the first protective layer and the first negative active material layer than those of the all-solid secondary batteries of Examples 1 to 3, and thus it was considered that the deterioration of the negative current collector was relatively increased by the solid electrolyte.

The all-solid secondary battery of Comparative Example 1 does not include the first protective layer and the first negative active material layer, thereby having inferior lifespan characteristics to that of the all-solid secondary batteries of Examples 1 to 4. It was considered that the negative current collector easily deteriorated and the growth of lithium dendrite was promoted in the all-solid secondary battery of Comparative Example 1 because the all-solid secondary battery did not include the first protective layer and the first negative active material layer were absent.

The all-solid secondary battery of Comparative Example 2 exhibited inferior lifespan characteristics to those of the all-solid secondary batteries of Example 1 to 4 because the first negative active material layer was not utilized. It was considered that the all-solid secondary battery of Comparative Example 2 deteriorated because formation and growth of lithium dendrite were not effectively inhibited because the all-solid secondary battery did not include the first negative active material layer.

The all-solid secondary battery of Comparative Example 3 exhibited relatively inferior lifespan characteristics to those of the all-solid secondary batteries of Example 1 to 4 because the wet graphene layer and the wet first negative active material layer were utilized. It was considered that deterioration of the negative current collector caused by the solid electrolyte was not effectively inhibited by the wet graphene layer and the wet first negative active material layer in the all-solid secondary battery of Comparative Example 3 compared to the first protective layers and the first negative active material layers of Examples 1 to 4.

Although not shown in Table 2, the all-solid secondary battery of Example 5 had relatively improved lifespan characteristics due to improved structural stability compared to the all-solid secondary battery of Example 1.

Although not shown in Table 2, the all-solid secondary battery of Reference Example 1 had inferior lifespan characteristics to the all-solid secondary batteries of Examples 1 to 4 because the inactive member gasket was not included therein.

Formation of a lithium metal plated layer corresponding to the second negative active material layer was confirmed between the solid electrolyte layer and the negative current collector based on cross-sectional images obtained by utilizing an SEM after the first cycle of charging was completed in the all-solid secondary batteries of Examples 1 to 4.

In the all-solid secondary batteries of Examples 1 to 4, relative bulk densities of the first protective layer (carbon layer) were shown in the following order: Example 1 ≒ Example 2 > Example 3 ≒ Example 4. The bulk densities of the dry first protective layers of Examples 1 to 4 were higher than the bulk density of the wet first protective layer of Comparative Example 3.

As described above, the all-solid secondary battery according to embodiments may be applied to one or more suitable types (kinds) of portable devices and vehicles.

Although embodiments are described above with reference to illustrated drawing, the present disclosure is not limited thereto. It is obvious that one or more suitable alternations and modifications will be apparent to one or ordinary skill in the art to which this application belongs within protection coverage of the present disclosure.

By utilizing the all-solid secondary battery having a new structure according to embodiments, thickness uniformity of the negative active material layer may be improved and aggregation of the negative active material may be inhibited, and thus an all-solid secondary battery having inhibited short circuits and improved cycle characteristics may be provided.

In present disclosure, "not include a or any 'component'", "exclude a or any 'component'", "'component'-free", and/or the like refers to that the "component" not being added, selected or utilized as a component in the composition, but the "component" of less than a suitable amount may still be included due to other impurities and/or external factors.

A battery management system (BMS) device, and/or any other relevant devices or components according to embodiments of the present invention described herein may be implemented utilizing any suitable hardware, firmware (e.g., an application-specific integrated circuit), software, or a combination of software, firmware, and hardware. For example, the various components of the device may be formed on one integrated circuit (IC) chip or on separate IC chips. Further, the various components of the device may be implemented on a flexible printed circuit film, a tape carrier package (TCP), a printed circuit board (PCB), or formed on one substrate. Further, the various components of the device may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the present disclosure.

It should be understood that embodiments described herein should be considered in a descriptive sense only and not for purposes of limitation. Descriptions of features or aspects within each embodiment should typically be considered as available for other similar features or aspects in other embodiments. While one or more embodiments have been described with reference to the drawings, it will be understood by those of ordinary skill in the art that one or more suitable changes in form and details may be made therein without departing from the spirit and scope of the present disclosure as defined by the following claims and equivalents thereof.

Embodiments are set out in the following clauses:
Clause 1. An all-solid secondary battery comprising: a positive electrode layer; a negative electrode layer; and a solid electrolyte layer disposed between the positive electrode layer and the negative electrode layer,
   wherein the positive electrode layer comprises: a positive current collector; and a positive active material layer, the solid electrolyte layer comprises a sulfide-based solid electrolyte, and
   the negative electrode layer comprises: a negative current collector; a first negative active material layer; and a first protective layer disposed between the negative current collector and the first negative active material layer,
   wherein the first negative active material layer comprises a carbonaceous material matrix and a metallic negative active material located in the carbonaceous material matrix,
   the carbonaceous material matrix comprises a first carbonaceous nanostructure, and the first protective layer includes a second carbonaceous nanostructure.
Clause 2. The all-solid secondary battery of clause 1, wherein the first carbonaceous nanostructure comprises a two-dimensional carbonaceous nanostructure, and
   the two-dimensional carbonaceous nanostructure comprises graphene, a graphene oxide, a reduced graphene oxide, or a combination thereof.
Clause 3. The all-solid secondary battery of clauses 1 to 2, wherein the carbonaceous material matrix comprises a first carbonaceous nanostructure arranged in a direction.
Clause 4. The all-solid secondary battery of clauses 1 to 3, wherein the carbonaceous material matrix comprises a first carbonaceous nanostructure irregularly disposed.
Clause 5. The all-solid secondary battery of clauses 1 to 4, wherein the carbonaceous material matrix comprises crystalline carbon, amorphous carbon, or a combination thereof.
Clause 6. The all-solid secondary battery of clauses 1 to 5, wherein the carbonaceous material matrix further comprises pores, and the carbonaceous material matrix is a lithium host.
Clause 7. The all-solid secondary battery of clauses 1 to 6, wherein the metallic negative active material comprises:
   a core; and a shell formed along a surface of the core,
   wherein the core comprises a metal forming an alloy or compound with lithium, and the shell comprises a carbonaceous material.
Clause 8. The all-solid secondary battery of clauses 1 to 7, wherein the metal forming an alloy or compound with lithium comprises an alloy-forming element selected from gold (Au), platinum (Pt), palladium (Pd), silicon (Si), silver (Ag), aluminum (Al), bismuth (Bi), tin (Sn), zinc (Zn), or a combination thereof.
Clause 9. The all-solid secondary battery of clauses 1 to 8, wherein the shell comprises a third carbonaceous nanostructure, or the shell comprises amorphous carbon.
Clause 10. The all-solid secondary battery of clauses 1 to 9, wherein the metallic negative active material has a particle shape, the core has a particle diameter of about 10 nm to about 500 nm, and the shell has a thickness of 50 nm or less.
Clause 11. The all-solid secondary battery of clauses 1 to 10, wherein an amount of the metallic negative active material is 10 parts by weight or less based on 100 parts by weight of the carbonaceous material matrix.
Clause 12. The all-solid secondary battery of clauses 1 to 11, wherein the first negative active material layer has a thickness of 20 µm or less, and the first negative active material layer is free from a binder,
   a ratio (C1/C2) of a charging capacity C1 of the first negative active material to a charging capacity C2 of the positive active material layer is from about 0.001 to about 0.45,
   a thickness of the first negative active material layer is greater than a thickness of the first protective layer, and
   a peak intensity ratio (I_{D}/I_{G}) of D-band peak intensity (I_{D}) at around 1350 cm⁻¹ derived from amorphous carbon to G-band peak intensity (I_{G}) at around 1580 cm⁻¹ derived from crystalline carbon in a Raman spectrum of the negative electrode layer is from about 0.01 to about 5.
Clause 13. The all-solid secondary battery of clauses 1 to 12, wherein the second carbonaceous nanostructure comprises a two-dimensional carbonaceous nanostructure, and
   the two-dimensional carbonaceous nanostructure comprises graphene, a graphene oxide, a reduced graphene oxide, or a combination thereof.
Clause 14. The all-solid secondary battery of clauses 1 to 13, wherein the first protective layer comprises a second carbonaceous nanostructure arranged in a direction with respect to the surface of the negative current collector,
   wherein the second carbonaceous nanostructure is arranged in a direction parallel to the surface of the negative current collector or in a direction protruding from the surface of the negative current collector, and
   the second carbonaceous nanostructure is stacked in a thickness direction of the first protective layer, and the second carbonaceous nanostructure is stacked up to 100 layers.
Clause 15. The all-solid secondary battery of clauses 1 to 14, wherein the first protective layer is directly disposed on the negative current collector, and the first protective layer is inert to the sulfide-based solid electrolyte, and
   the first protective layer has a thickness of 2 µm or less, and the first protective layer is free from a binder.
Clause 16. The all-solid secondary battery of clauses 1 to 15, further comprising a second negative active material layer disposed between the solid electrolyte layer and the negative current collector,
   wherein the second negative active material layer is disposed at one or more positions between the first negative active material layer and the first protective layer and between the first negative active material layer and the solid electrolyte layer, and
   the second negative active material layer comprise a metal layer including lithium or a lithium alloy.
Clause 17. The all-solid secondary battery of clauses 1 to 16, wherein the negative current collector comprises indium (In), copper (Cu), magnesium (Mg), titanium (Ti), iron (Fe), cobalt (Co), nickel (Ni), zinc (Zn), aluminum (Al), germanium (Ge), chromium (Cr), or an alloy thereof.
Clause 18. The all-solid secondary battery of clauses 1 to 17, wherein at least one of the positive current collector and the negative current collector comprises a base film and a metal layer disposed on one side or both sides of the base film,
   wherein the base film comprises a polymer, the polymer comprising polyethyleneterephthalate (PET), polyethylene (PE), polypropylene (PP), polybutyleneterephthalate (PBT), polyimide (PI), or a combination thereof, and
   the metal layer comprises indium (In), copper (Cu), magnesium (Mg), titanium (Ti), iron (Fe), cobalt (Co), nickel (Ni), zinc (Zn), aluminum (Al), germanium (Ge), lithium (Li), or an alloy thereof.
Clause 19. The all-solid secondary battery of clauses 1 to 18, further comprising an inactive member disposed on one side surface of the positive electrode layer,
   wherein the inactive member is disposed along side surfaces of the positive electrode layer to surround the positive electrode layer, and
   the inactive member comprises a position determiner configured to determine a position of the inactive member on the solid electrolyte layer.
Clause 20. The all-solid secondary battery of clauses 1 to 19, wherein the positive active material layer comprises a positive active material,
   the positive active material comprising an oxide-based positive active material, a sulfide-based positive active material, or a combination thereof,
   wherein the oxide-based positive active material comprises a lithium transition metal oxide, a metal oxide, or a combination thereof, the lithium transition metal oxide comprises a lithium cobalt oxide, a lithium nickel oxide, a lithium nickel cobalt oxide, a lithium nickel cobalt aluminum oxide, a lithium nickel cobalt manganese oxide, a lithium manganate, a lithium iron phosphate, or a combination thereof, and the metal oxide comprises an iron oxide, a vanadium oxide, or a combination thereof, and
   the sulfide-based positive active material comprises a nickel sulfide, a copper sulfide, Li₂S, a Li₂S-containing composite, or a combination thereof.

## Claims

1. An all-solid secondary battery (1) comprising:
a positive electrode layer (10);
a negative electrode layer (20); and
a solid electrolyte layer (30) between the positive electrode layer (10) and the negative electrode layer (20),
wherein,
the positive electrode layer (10) comprises:
a solid electrolyte layer (11); and
a positive active material layer (12),
the solid electrolyte layer (30) comprises a sulfide-based solid electrolyte, and
the negative electrode layer (20) comprises:
a negative current collector (21);
a first negative active material layer (22); and
a first protective layer (23) between the negative current collector (21) and the first negative active material layer (22), and
wherein,
the first negative active material layer (22) comprises a carbonaceous material matrix and a metallic negative active material in the carbonaceous material matrix, and
the carbonaceous material matrix comprises a first carbonaceous nanostructure, and the first protective layer (23) comprises a second carbonaceous nanostructure.

2. The all-solid secondary battery (1) as claimed in claim 1, wherein,
the first carbonaceous nanostructure comprises a two-dimensional carbonaceous nanostructure, and
the two-dimensional carbonaceous nanostructure comprises graphene, a graphene oxide, a reduced graphene oxide, or a combination thereof.

3. The all-solid secondary battery (1) as claimed in claim 1 or 2, wherein the carbonaceous material matrix comprises the first carbonaceous nanostructure arranged in a direction with respect to a surface of the negative current collector (21), or wherein the carbonaceous material matrix comprises the first carbonaceous nanostructure irregularly arranged.

4. The all-solid secondary battery (1) as claimed in claims 1 to 3, wherein the carbonaceous material matrix comprises crystalline carbon, amorphous carbon, or a combination thereof, and / or wherein the carbonaceous material matrix further comprises pores, and the carbonaceous material matrix is a lithium host.

5. The all-solid secondary battery (1) as claimed in claims 1 to 4, wherein the metallic negative active material comprises:
a core; and
a shell arranged along a surface of the core, and
wherein the core comprises a metal capable of forming an alloy or compound with lithium, and the shell comprises a carbonaceous material, preferably the metal comprises an alloy-forming element selected from among gold (Au), platinum (Pt), palladium (Pd), silicon (Si), silver (Ag), aluminum (Al), bismuth (Bi), tin (Sn), zinc (Zn), or a combination thereof.

6. The all-solid secondary battery (1) as claimed in claim 5, wherein the shell comprises a third carbonaceous nanostructure, or the shell comprises amorphous carbon.

7. The all-solid secondary battery (1) as claimed in claims 1 to 6, wherein the metallic negative active material has a particle shape, the core has a particle diameter of about 10 nm to about 500 nm, and the shell has a thickness of 50 nm or less.

8. The all-solid secondary battery (1) as claimed in claims 1 to 7, wherein an amount of the metallic negative active material is 10 parts by weight or less based on 100 parts by weight of the carbonaceous material matrix.

9. The all-solid secondary battery (1) as claimed in claim 1 to 8, wherein the first negative active material layer (22) has a thickness of 20 µm or less, and the first negative active material layer (22) is free from a binder,
a ratio (C1/C2) of a charging capacity C1 of the first negative active material to a charging capacity C2 of the positive active material layer (12) is from about 0.001 to about 0.45,
a thickness of the first negative active material layer (22) is greater than a thickness of the first protective layer (23), and
a peak intensity ratio (I_{D}/I_{G}) of D-band peak intensity (I_{D}) at about 1350 cm⁻¹ derived from amorphous carbon to G-band peak intensity (I_{G}) at about 1580 cm⁻¹ derived from crystalline carbon in a Raman spectrum of the negative electrode layer (20) is from about 0.01 to about 5.

10. The all-solid secondary battery (1) as claimed in claims 1 to 9, wherein the second carbonaceous nanostructure comprises a two-dimensional carbonaceous nanostructure, and
the two-dimensional carbonaceous nanostructure comprises graphene, a graphene oxide, a reduced graphene oxide, or a combination thereof.

11. The all-solid secondary battery (1) as claimed in claims 1 to 10, wherein the first protective layer (23) comprises the second carbonaceous nanostructure arranged in a direction with respect to a surface of the negative current collector (21),
wherein the second carbonaceous nanostructure is arranged in a direction parallel to the surface of the negative current collector (21) or in a direction protruding from the surface of the negative current collector (21), and
the second carbonaceous nanostructure is stacked in a thickness direction of the first protective layer (23), and the second carbonaceous nanostructure is stacked up to 100 layers, preferably, wherein the first protective layer (23) is directly on the negative current collector (21), and the first protective layer (23) is inert to the sulfide-based solid electrolyte, and
the first protective layer (23) has a thickness of 2 µm or less, and the first protective layer (23) is free from a binder.

12. The all-solid secondary battery (1) as claimed in claims 1 to 11, further comprising a second negative active material layer between the solid electrolyte layer (30) and the negative current collector (21),
wherein the second negative active material layer is at one or more positions between the first negative active material layer (22) and the first protective layer (23) and between the first negative active material layer (22) and the solid electrolyte layer (30), and
the second negative active material layer comprises a metal layer comprising lithium or a lithium alloy, preferably, wherein the negative current collector (21) comprises indium (In), copper (Cu), magnesium (Mg), titanium (Ti), iron (Fe), cobalt (Co), nickel (Ni), zinc (Zn), aluminum (Al), germanium (Ge), chromium (Cr), or an alloy thereof.

13. The all-solid secondary battery (1) as claimed in claims 1 to 12, wherein at least one of the solid electrolyte layer (11) and the negative current collector (21) comprises a base film and a metal layer on at least one side of the base film,
wherein the base film comprises a polymer, the polymer comprising polyethyleneterephthalate (PET), polyethylene (PE), polypropylene (PP), polybutyleneterephthalate (PBT), polyimide (PI), or a combination thereof, and
the metal layer comprises indium (In), copper (Cu), magnesium (Mg), titanium (Ti), iron (Fe), cobalt (Co), nickel (Ni), zinc (Zn), aluminum (Al), germanium (Ge), lithium (Li), or an alloy thereof.

14. The all-solid secondary battery (1) as claimed in claims 1 to 13, further comprising an inactive member (40) on at least one side of the positive electrode layer (10),
wherein the inactive member (40) is at side surfaces of the positive electrode layer (10) to be around the positive electrode layer (10), and
the inactive member (40) comprises a position determiner configured to determine a position of the inactive member (40) on the solid electrolyte layer (30).

15. The all-solid secondary battery (1) as claimed in claims 1 to 14, wherein the positive active material layer (12) comprises a positive active material,
the positive active material comprising an oxide-based positive active material, a sulfide-based positive active material, or a combination thereof,
wherein the oxide-based positive active material comprises a lithium transition metal oxide, a metal oxide, or a combination thereof, the lithium transition metal oxide comprises a lithium cobalt oxide, a lithium nickel oxide, a lithium nickel cobalt oxide, a lithium nickel cobalt aluminum oxide, a lithium nickel cobalt manganese oxide, a lithium manganate, a lithium iron phosphate, or a combination thereof, and the metal oxide comprises an iron oxide, a vanadium oxide, or a combination thereof, and
the sulfide-based positive active material comprises a nickel sulfide, a copper sulfide, Li₂S, a Li₂S-containing composite, or a combination thereof.
